# EUROPEAN PATENT SPECIFICATION

(11) **EP 4 001 856 B1**
(45) Date of publication and mention of the grant of the patent: **09.12.2026**
(21) Application number: 21020546.4
(22) Date of filing: 04.11.2021
(51) Int. Cl.: G01F 1/20, G01F 1/80, G01F 5/00, G01F 7/00

(54) **REACTION FLOW METER WITHOUT MOVING PARTS IN INDIVIDUAL, BYPASS AND RESPECTIVELY EXTENDED CONFIGURATION, AND A METHOD OF FLOW MEASUREMENT BASED ON IT**
REAKTIONSDURCHFLUSSMESSGERÄT OHNE BEWEGLICHE TEILE IN EINZEL-, BYPASS- BZW. ERWEITERTER KONFIGURATION UND DARAUF BASIERTES VERFAHREN ZUR DURCHFLUSSMESSUNG
DÉBITMÈTRE À RÉACTION SANS PIÈCES MOBILES EN CONFIGURATION RESPECTIVEMENT INDIVIDUELLE, EN DÉRIVATION ET ÉTENDUE ET PROCÉDÉ DE MESURE DU DÉBIT BASÉ SUR CELUI-CI

(30) Priority: 24.11.2020 RO 202000774
(43) Date of publication of application: 25.05.2022
(73) Proprietor: Motit, Horia Mihai, 021142 Bucuresti (RO)
(72) Inventor: Motit, Horia Mihai, 021142 Bucuresti (RO)
(74) Representative: Strenc, Alexandru Cristian

(56) References cited:
- EP-A2- 3 588 016
- WO-A1-97/02470
- SE-C1- 157 135
- US-A- 2 897 672
- US-A- 3 203 241
- US-A- 3 293 913
- US-A- 3 538 769
- US-A- 4 612 814
- US-A- 4 677 859
- US-A- 5 121 658
- US-A- 5 861 561
- US-A1- 2003 167 836

## Description

The aim of this invention is defining and applying of new technical solutions for flow measurement by using devices consisting of individual, bypass or extended reaction flowmeters without moving parts usable in measuring the flow rate of any fluid (liquids, gases, steam), for extensive measuring ranges of them, correlated with an optimal measurement accuracy and with ensuring low cost acquisition, installation and maintenance, due to the simplicity configuration of the fluid flow path through the flowmeter.

It is known from the European Patent EP 3364159 B1 a computer- implemented method for unitary synthesis and design of flowmeters and of compound gauging structures, whose algorithm allows the configuration of practically any new type of flowmeter and combination of flowmeters, and already confirmed by all currently known solutions, by successive interconnection, according to an original matrix of logical criteria, of some original basic functional blocks, identified by the author.

The presented method has the advantage that it allowed the substantiation and definition of a new category of flow meters, called with reaction, but however being a theoretical method, it has the disadvantage that it cannot present a concrete constructive structure of these types of flow meters.

From the patent application RO 133994 A2, it is known both the method of flow measurement through the action of a reaction force and its application in the construction and achievement of flow meters with moving parts.

Disadvantages of the reaction flowmeters solutions with moving parts, as indicated in the state of the art, consist in a higher complexity of the achievement and joining of the flowmeter components and implicitly in the increase of the realization and use costs of these types of flowmeters.

In addition, the existence of some moving parts leads, through this principle constructive solution, to the decrease of the life duration of the flowmeter as a whole.

From patent document EP 3588016 A2, there are also known the reaction flowmeters without moving parts, based either on the direct measurement, in fluid, of the reaction torque, either by taking by magnetic coupling and measuring the reaction torques outside the fluid, respectively by measurement of the reaction force by differential measurement of the pushing pressure it produces.

The patent document US 4677859 A, presents a solution of flowmeter suitable for the measurement of the mass flow rate of two phase flows, based on a S-shaped flow tube and force transducers fitted at the bends of the tube which measure the reaction forces during fluid flow, the reaction tube being mounted on a flexure suspension. The means for measuring the reaction force is based on two force transducer or load cells in the form of strain gauge or piezo electric devices. The measuring fluid completely fills the housing of the flowmeter, inside which the sensors are positioned, This technical solution might present important limitations regarding the flow measurement accuracy, including by not ensuring a smooth take-up / discharge of the fluid flowing by the reaction tube, from the inlet connection, to the outlet connection of the flowmeter.

It is equally known the solution in the patent document US 3538769 presenting a movable tube flowmeter of angular momentum type, comprising a main tube which can make rotary displacement or swinging movement about a fixed axis and has straight inlet and outlet tube portions which are connected to stationary pipes by bellows. The flowmeter is so constructed that the angular momentum, about the fixed axis, of a fluid of unit mass at the inlet end of the movable tube is not equal to the angular momentum, about the same fixed axis, of the fluid of unit mass at the outlet end of the movable tube when the fluid flows through the movable tube in the form of a steady flow. The flowing direction of the incoming fluid may differ from the flowing direction of the outgoing fluid, or the incoming fluid and the outgoing fluid may flow in the same direction in parallel with each other. The fixed axis about which the movable tube makes its rotary displacement is normally perpendicular with respect to the directions of flow of the incoming fluid and outgoing fluid.

The solution of a reaction tube coupled and supported at both ends with the elastic bellows with respect to the inlet / outlet connections of the flow meter, requires that the reaction tube has a combined linear-angular displacement which might determine some possible important limitations in terms of measuring accuracy, which could also be randomly modified over time by "aging of bellows"; and also in terms of usability for any type or physic-chemical parameters of the measuring fluid.

Another flow measuring solution is presented in the patent document US 3203241, based on the use of the magnetostrictive properties of certain metals, or alloys of those metals, in a volumetric flow measuring device. More specifically, magnetostrictive elements are associated with a portion of a conduit, the conduit being subject to forces resulting from the flow of a particular medium through the conduit and in such a manner as to exert a force on the magnetostrictive element in accordance with the flow rate of the medium. The force so exerted is then translated, through the magnetostrictive properties of the elements, into a corresponding electrical signal.

The reaction tube, placed in a vertical plane, is double-bent, S-shaped, elastically connected to two bellows and like in previous solutions upper presented, this functional feature may cause a significant alteration of the flow measurement accuracy, because the force measured by the sensor does not reflect the value of the reaction force, but the value resulting from the interference of the elastic resistance forces of the bellows, that vary with a reduced accuracy depending on the value of the flow rate, and randomly modified over time by the "aging of the bellows" as well as due to the type and physic-chemical parameters of the measuring fluid.

However, the solutions presented do not exhaust the functional and constructive possibilities of flow meters without moving parts and, in addition, have limits in ensuring the maximization of the value of the ratio between the maximum flow and the minimum flow measured by the flowmeter, optimally correlated with the minimization of the variation interval of the maximum permissible values of its measurement error.

In addition, present solutions do not offer the possibility to extend the measuring ranges of the flow meters, with related implications regarding the improvement of the measurement accuracy.

Technical problem solved by the present invention consists in configuring new types of flow meters without moving parts, based on a nonlinear relationship between the flow rate and their output parameter, when the generated reaction force is used as output parameter by being measured consequently, completed by individual or coupled correlated configurations, as well as on a linear relationship between the flow rate and their output parameter, by nonlinear translation of the reaction force into another parameter, which becomes the output parameter of the flowmeter, thus resulting in its linear dependence on flow rate.

Thus, it is ensured a functional optimum, by increasing the value of the ratio between the maximum flow rate and the minimum flow rate measured by the flowmeter, corresponding to an optimal range of accuracy values, rendered by the maximum permissible values of its measurement error.

The present invention provides a reaction flowmeter without moving parts as defined in claim 1 and a method as defined in claim 4. Preferred embodiments are defined by the dependent claims.

The reaction flow meters according to this invention, are considered without moving parts, because functionally they involve an angular displacement of the reaction tube practically insignificant (generally only 0.2⁰ ...... 0.6⁰).

The reaction flowmeters without moving parts according to this invention, are constituted, in individual structure, of a Primary Element consisting of the connection between a Reference Block BR, made in the form of a fixed horizontal access tube, and a Sensitive Block BS made as a curved quasi-immobile tube, and an ES Sensitive Element, made, either as the sensor of the moment of force, or as a differential pressure sensor, or as a force sensor.

This curved quasi-immobile tube is called, according to the invention, immobile reaction element, and the flowmeter made on the basis of the method in this configuration, is called reaction flowmeter without moving parts.

These reaction flowmeters, in individual configuration, use a non-linear functional dependence between the measured mass flow rate Qₘ and the reaction force F_{R} which it generates on a reaction element, materialized by 'the reaction tube', which practically remains immobile during the measurement of the mass flow rate.

Depending on the sensor type and on the measurement mode of the F_{R} force, the flowmeter without moving parts, which uses as output parameter the F_{R} force, which varies nonlinearly with the flow rate, is achievable with the measurement of the F_{R} force, with differential measurement of F_{R} (with a differential pressure sensor), and with direct measurement of the F_{R} force, in two distinct functional solutions, respectively, by an electromagnetic balancing of F_{R} or with a load cell with a sensor strain gauge type.

The reaction flowmeter also considers a technical solution having the linear dependence "the output parameter obtained by the non-linear transformation of the reaction force F_{R} - measured flow rate", achieved by means of a cam which ensures the nonlinear transformation of the force F_{R} in output parameter, so that the dependence between the output parameter and the measured flow rate Qₘ is linearized.

Another configuration regarding the reaction flowmeters without moving parts, is of bypass type, with nonlinear dependence "output parameter - measured flow rate".

This solution provides the placement of a reaction flowmeter without moving parts on a secondary conduit, in parallel with a main conduit provided with a fluidic resistance. The secondary conduit has a significantly smaller diameter than that of the main conduit.

By establishing the relationship between the fluid flows rates passing through the two conduits, this configuration ensures, by an effective measurement of a small secondary flow rate by the related reaction flowmeter, the determination by computing of the total measured flow rate.

A last solution is rendered by a configuration in the form of a special connection and functional correlation, between two nonlinear reaction flowmeters, which have the two flow measurement ranges thus correlated that, the values of one are a continuation of the other, with a very small overlap between them.

According to the previously stored algorithm , an electronic block of the flowmeter controls the switching, by using a jet diverter, of the fluid flow through the main flowmeter, corresponding to the branch with the larger diameter, or through the secondary flowmeter corresponding to the branch with smaller diameter.

In this way, is achieved a significant extension of the total flow measurement range of this type of flowmeters and, consequently, these flowmeters are called "extended reaction flowmeters".

In order to solve the technical problem as exposed, in all configurations of flowmeters developed under this invention, the force sensors are placed outside the measuring fluid and are actuated by magnetic coupling.

Further are presented several examples of embodiments of reaction flowmeter without moving parts, with reference also to figures 1-10, which represent:
Fig.1 - Basic (principled) scheme of a reaction flowmeter: a) -in individual configuration with nonlinear dependence output parameter - measured flow rate; b) -in individual configuration with linear dependence output parameter - measured flow rate; c) -in bypass configuration; d) - in extended configuration;
Fig.2 - Reaction flowmeter with direct measurement, in fluid, of the reaction torque: a) longitudinal section; b) section with a plane A-A; c) side view;
Fig.3 -Reaction flowmeter with taking over by magnetic coupling and measuring of reaction torque outside the fluid: a) longitudinal section; b) section with a plane A-A;
Fig.4 - Reaction flowmeter with measurement of the reaction force, by the differential measurement of the pressing pressure which it produces: a) longitudinal section; b) section with a plane A-A;
Fig.5 - Reaction flowmeter with the measurement of the reaction force by electromagnetic balancing: a) longitudinal section; b) section with a plane A-A;
Fig.6- Reaction flowmeter with linear dependence between the output parameter and the measured flow rate: a) horizontal longitudinal section; b) section with a plane A-A; c) top view;
Fig.7- Structural scheme bypass type reaction flowmeter;
Fig.8- Reaction flowmeter in extended structure, with the measurement of the output pushing force, by electromagnetic balancing;
Fig.9- Reaction flowmeter in extended structure, with differential measurement of the output pushing force;
Fig. 10 - Functional diagram of the extended reaction flowmeter and of its performances, corresponding to the continue measurement along its entire measurement range

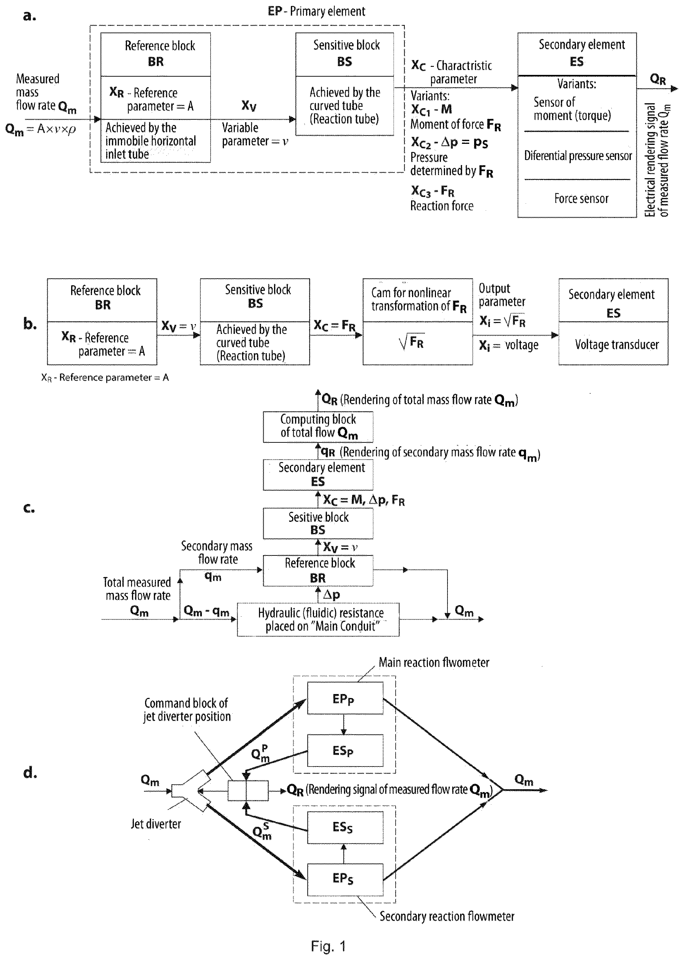

Making reference to Fig.1 a, the reaction flowmeter without moving parts, according to invention, is constituted, in the individual structure, of a Primary Element that consists of the association between a BR reference block, achieved in the form of a fixed horizontal access tube, and a Sensitive block BS made as a quasi-immobile curved tube, and respectively a Sensitive Element ES, achieved, either as a sensor of force moment, or as a differential pressure sensor, or as a force sensor.

The quasi-immobile curved tube is called, according to the invention, immobile reaction element, and the flowmeter achieved on the basis of the method in this configuration, is called reaction flowmeter without moving parts.

These reaction flowmeters, in individual configuration, use a non-linear functional dependence between the measured mass flow rate Qₘ and the reaction force F_{R} that this generates on a reaction element, materialized by the "reaction tube", which remains practically immobile during the measurement of mass flow rate, according to the relationship: ${F}_{R} = k x {ρ}^{- 1} {{xQ}_{m}}^{2}$ where:
F_{R} - reaction force (measured parameter, used as output parameter of the flowmeter);
Qₘ - measured mass flow rate (input parameter of the flowmeter);
k - constant;
ρ -density of the measured fluid.

Depending on the type of sensor and of the measurement mode of force F_{R}, the flowmeter without moving parts, which uses force F_{R} as output parameter, which non-linearly varies with flow rate, is achievable with moment measurement of force F_{R}, with differential measurement of F_{R}, by means of a differential pressure sensor, and with direct measurement of force F_{R}, in two distinct functional solutions respectively, by electromagnetic balancing of F_{R}, or with a load cell with a sensor strain gauge type.

The reaction flowmeter also considers a technical solution having the linear relationship of dependence " output parameter obtained by the non-linear transformation of the reaction force F_{R} - measured flow rate", achieved by means of a cam, used for nonlinear transformation of the force F_{R} - in output parameter X_{I} = F_{R}^{1/2},

Thus, the dependence between the output parameter X_{I} and the measured flow rate Qₘ is linear respectively according to the relationship:${X}_{I} = \left({k}_{1} \times ρ-1\right) {xQ}_{m}$

Another configuration regarding the flow meters with reaction without moving parts, is of a bypass type, with nonlinear dependence "output parameter - measured flow". This solution provides the placement of a reaction flowmeter without moving parts on a secondary conduit, in parallel with a main conduit provided with a fluid resistance. The secondary conduit has a significantly smaller diameter than that of the main conduit.

By establishing in advance the relationship between the fluid flow rates passing through the two conduits, this configuration ensures, by an effective measurement only of a small secondary flow by the corresponding reaction flow meter, the determination by computing of the total measured flow rate.

A last solution is given by a configuration in the form of a special functional connection and correlation, between two nonlinear reaction flowmeters, which have the two flow measurement ranges thus correlated that, the values of one are in continuation of the other, with a very small overlap between them.

According to the previously stored algorithm, an electronic block of the flowmeter controls the switching, with a jet deflector, of the fluid flow through the main flowmeter, corresponding to the large diameter branch or through the secondary flowmeter related to the small diameter branch.

In this way, a significant extension of the total flow measurement range of this type of flowmeter is achieved and, consequently, these flowmeters are called "extended reaction flow meters".

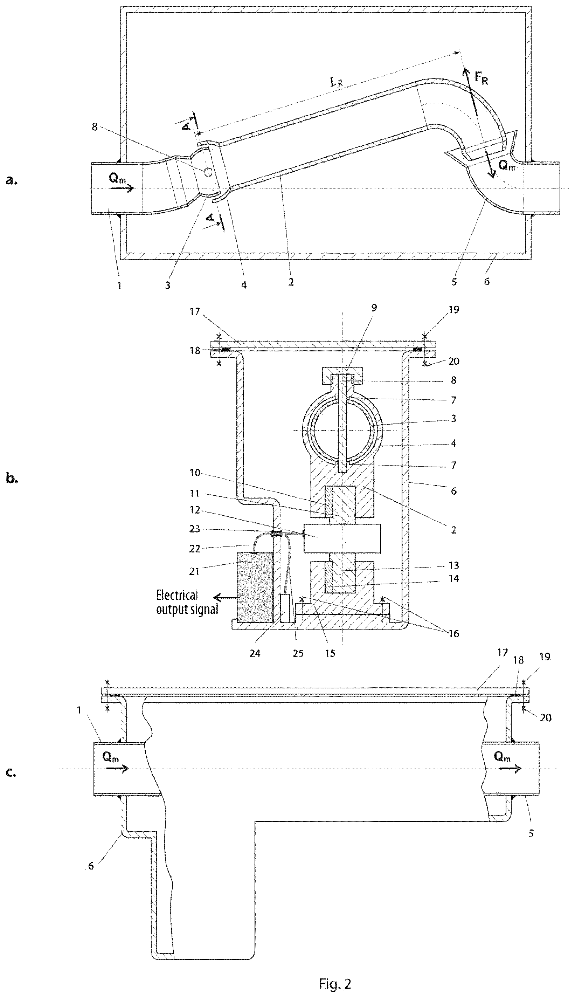

A first example of embodiment of the flowmeter without moving parts, not encompassed by the wording of the claims, based on a non-linear functional relationship of dependence between the reaction force and the flow rate, considers a reaction flowmeter with direct measurement in fluid of the reaction torque (Fig. 2a, b, c).

The measuring fluid enters the flowmeter through an inlet connection 1 and continues to flow through a reaction tube 2, passing through the spherical coupling made of a nozzle (spherical calotte) 3 belonging to the inlet connection 1 and a nozzle (spherical calotte ) 4 belonging to the reaction tube 2.

The fluid then passes through the reaction tube 2, which is bent at the other end by 90⁰, and terminates with a convergent nozzle. The fluid coming out of the reaction tube 2 is taken up by an outlet connection 5 through which it is discharged from the flowmeter.

The outlet connection 5 takes over the fluid through a wide converging nozzle, so as not to disturb the reaction tube 2, at its very small functional rotation.

The connections 1 and 5 are fixed rigidly and tightly to the housing 6 of the flow meter, having their symmetry axes collinear, on the same horizontal.

The radial equidistance between the nozzle (spherical calotte) 3 of output from the inlet connection 1 and the nozzle (spherical calotte) 4 of entry into the reaction tube 2 is constructively made by two bosses 7 corresponding to the spherical calotte 4 of the reaction tube 2.

The bosses 7 are cylindrical, and are placed vertically, up and down around a vertical shaft 8 (according to Fig.2). In special situations, the bosses 7 can be replaced by a continuous circular crown along the inner circumference of the spherical calotte 4.

The bosses 7 have a very small height and a small outer diameter, ensuring the decrease at minimum of the contact friction between the nozzle (spherical calotte 3) of the inlet connection 1 and the nozzle (spherical calotte 4) of the reaction tube 2.

Rigorously concentric positioning of the two spherical calottes 3 and 4 is performed by a metal shaft 8.

The spherical calotte 3 of the inlet connection 1 is provided with two circular holes positioned vertically, diametrically opposed, having a diameter a little larger than that of the shaft 8, to ensure the minimum play against it.

The inlet connection 1 is rigidly mounted to the housing 6, so that the axis of the centers of the two holes is in a perfectly vertical position.

The spherical calotte 4 of the reaction tube 2 is provided, at its upper part, with a circular hole having the same diameter as that of the two holes drilled diametrically opposite in the spherical calotte 3.

Diametrically opposite this hole, the calotte 4 is provided with a clogged hole, having the same diameter as the three holes described above.

Rigorous positioning of the reaction tube 2 against to the inlet connection 1 is ensured by rigorously centric positioning of the spherical calottes 3 and 4, achieved by rigorously positioning on the same vertical of the upper hole of the calotte 3 with the shaft 8.

In this situation the shaft 8 passes easily through this hole as well as through the other hole existing in the calotte 3, at its lower part and diametrically opposed to the upper hole, the shaft finally occupying completely the clogged hole existing in the lower part of the calotte 4 of the reaction tube 2.

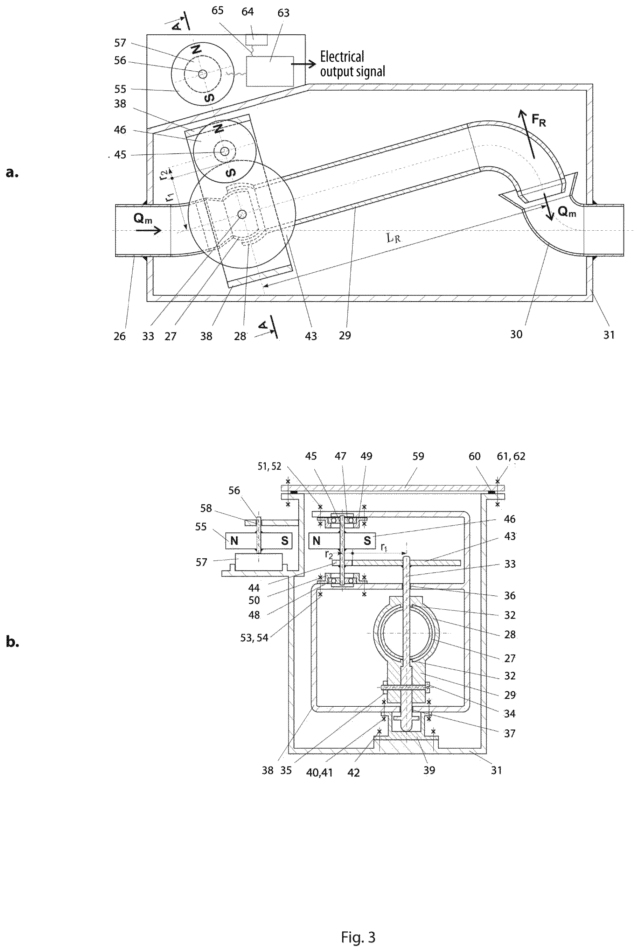

According to Fig. 3, the spatial positioning (x, y, z) between the two calottes 3 and 4 is thus rigorously ensured. Then, by screwing a nut 9 on the upper outer boss of the reaction tube 2, the permanent locking of the shaft 8 in this position is ensured.

By means of a wedge 10, the measuring shaft 11 of the torque transducer 12 being rigidly locked relative to the reaction tube 2 respectively to its outer boss with which it is provided at its lower part, takes over integrally the rotation torque of the tube 2.

The correct measurement of this torque is ensured by locking the rotation of a torque transducer 12, by locking its support shaft 13, relative to the housing 6 of the flowmeter with a wedge 14, positioned between it and the support 15 which, in turn, is rigidly fixed to the housing 6 by means of screws 16.

The housing 6 of the flowmeter is closed by a cover 17, which ensures the tightness of the flowmeter by tightening a gasket 18 with some screws 19 in the nuts 20.

Functionally, the reaction force F_{R} developed by the flow Qₘ, at the exit from of the reaction tube, determines the torque (moment) M_{R} = F_{R} x L_{R} which, in turn, reproduces the variation of Qₘ.

This torque (moment) of rotation is taken over by the measuring shaft 11 and implicitly by the torque transducer 12 whose output electrical signal, proportional to the measured mass flow rate, is taken over by an electronic block 21 through a cable 22, which is passed through the housing 6, through a stuffing box 23.

Although the influence of temperature on the output signal of the torque sensor is very small (0.01 .... 0.015% FS / 0 C), to ensure a very high accuracy of flow measurement, also is provided a temperature sensor 24, whose output signal is transmitted via a cable 25 to the electronic block 21 to ensure temperature compensation of the torque sensor output signal.

The torque transducer is immersed in the measuring fluid, its output signal being implicitly compensated with the temperature of the measuring fluid, measured by same sensor 24.

In the electronic block 21 is stored previously, following the experimental calibration on the rig of the reaction flowmeter, its specific correspondence M = M (Qₘ) between the torque measured by the transducer 12 and the flow rate Qₘ passed accordingly through the flowmeter.

Thus the output signal from the electronic block 21 renders the value of the mass flow rate Qₘ.

Since the measuring shaft 11 of the torque transducer 12 functionally requires a very small angle of maximum torsion, of 0.2⁰ ... 0.6⁰ for the measurement of its maximum (nominal) torque, implicitly also the reaction tube, which is rigid with the measuring shaft 11, will have the same insignificant angle of rotation for crossing the entire flow measurement range (Q_{m,minim} ... Q_{m,maxim}).

Consequently, because from functional point of view the rotation angle of the reaction tube is practically insignificant, this type of reaction flowmeter is practically considered as a flowmeter without moving parts.

Another embodiment of a nonlinear reaction flowmeter without moving parts, not encompassed by the wording of the claims, is with the taking over by magnetic coupling and the measurement of the reaction torque outside the fluid (Fig. 3a, b).

The measuring fluid enters in the flowmeter through an inlet connection 26 ending with a nozzle (spherical calotte) 27 which enters in a nozzle (spherical calotte) 28, related to a reaction tube 29.

Then the fluid passes through the reaction tube 29, which is bent at the other end to 90⁰ and terminates with a convergent nozzle.

The fluid coming out of the reaction tube is taken up by an outlet connection 30, through which it is discharged from the flowmeter.

The outlet connection 30 is provided at its inlet with a large convergent nozzle for taking up the fluid coming out of the reaction tube 29, this nozzle being thus designed not to disturb the reaction tube 29, at its very small rotation mentioned above.

The connections 26 and 30 are fixed rigidly and tightly to a housing 31 of the flowmeter, having the symmetry axes collinear on the same horizontal.

The radial equidistance between the nozzle (spherical calotte) 27 related to the inlet connection 26 and the nozzle (spherical calotte) 28 related to the reaction tube 29 is achieved constructively through two bosses 32, related to the spherical calotte 28 of the reaction tube 29.

The bosses 32 are cylindrical and are located vertically, up and down, around the vertical shaft 33.

In special situations the bosses 32 can be replaced with a continuous circular crown along the inner circumference of the spherical calotte 28.

The bosses 32, having a very small height and a small outer diameter, ensure the decrease to minimum of the contact friction between the inlet connection 26 and the reaction tube 29.

Rigorous positioning of the reaction tube 29 relative to the inlet connection 26 is ensured by rigorously concentric positioning of the spherical calottes 27 and 28, achieved by means of a vertical shaft 33.

The shaft 33 passes both through the two circular positioning holes, with which the spherical calotte 28 of the reaction tube 29 is provided, the holes being placed diametrically opposite in the vertical plane, and respectively through the two circular positioning holes, with which is provided the spherical calotte 27 of the inlet connection 26, the holes being placed diametrically opposite in the same vertical plane.

The tolerances of the diameters of the two positioning holes of the spherical calotte 27 ensure minimum clearances between it and the vertical shaft 33.

In turn, the vertical shaft 33 is stiffened relative to the reaction tube 29, respectively to its spherical calotte 28, by a locking system consisting by screw 34-nut 35.

The rigorous positioning, both horizontally and vertically of the shaft 33, is achieved by providing two holes (bearings) 36 and 37 for its passage through the upper and lower walls of a support 38 of the reaction tube 29.

The centers of the two holes (with a bearing role) 36 and 37 are rigorously placed on the same vertical and thus constructively is ensured both minimum horizontal clearance and minimum friction of the shaft 33.

The shaft 33 rests on a flange with collar 39, which is stiffened both to the support 38 by a system screw 40-nut 41 and to a housing 31 of the flowmeter by some screws 42.

On the upper end of the shaft 33 is rigidly placed a wheel (or only a circular sector with a very small angular opening) 43, with the role of a driving wheel, having a large diameter, which is coupled by friction (or by a fin gear) with a wheel 44, with the role of a driven wheel, having a smaller diameter.

Thus is ensures a transmission ratio, which ensures the corresponding multiplication of the rotation angle of the driven wheel 44 to the very small rotation angle of the driving wheel 43.

On a shaft 45 of the driven wheel 44 is placed rigidly a circular magnet 46, diametrically polarized. The shaft 45 can be rotated relative to the support 38, being rigidly fixed to the moving parts of some bearings 47 and 48. These bearings are fixed on the support 38 by tightening some pieces 49 and 50 with some systems screw 51 - nut 52 and respectively screw 53-nut 54.

A magnet 46, which is immersed in the measuring fluid, reproduces the rotation of the wheel 44 and by magnetic coupling determines the rotation of a magnet 55, which is placed outside the housing 31 of the flowmeter.

The outer magnet 55 is also diametrically polarized like the inner magnet 46.

The magnet 55 is rigidly fixed on a measuring shaft 56 of a torque transducer 57, being guided and rigorously positioned in a vertical position by a bearing 58, a bearing ensured through the passing hole itself, by the corresponding profiled extension of the outer wall of the housing 31 of the flowmeter.

The housing 31 of the flow meter is closed by a cover 59 which ensures the tightness of the flowmeter by tightening a gasket 60 with a system of screws 61 - nuts 62.

Functionally, the reaction force F_{R} developed by the flow rate Qₘ, at the outlet of the reaction tube 29, determines the torque (moment) M_{R} = F_{R} x L_{R} which thus renders the variation of the mass flow rate Qₘ .

This torque (moment of the force) of rotation is taken up by the shaft 33, the angle of rotation of which is amplified by the gear between the two wheels 43 and 44.

The rotation moment of the magnet 55 is measured by the torque transducer 57, because this magnet is rigidly mounted on the measuring shaft 56 of the transducer 57, causing its corresponding torsion.

The output signal from the torque transducer 57 is transmitted to an electronic block 63.

Although the influence of temperature on the output signal of the torque transducer is very small, in order to ensure a very high accuracy of flow measurement, it is provided the placement of a temperature sensor 64 next to the torque transducer 57, outside the housing 31, whose output signal is transmitted to the electronic block 63 by a cable 65, thus ensuring the temperature compensation of the output signal of the torque transducer 57.

In the electronic block 63 is stored previously, following the experimental calibration on the rig of the reaction flowmeter, its specific correspondence M = M (Qₘ), between the torque measured by the transducer 57 and the flow rate Qₘ correspondingly passed through the flowmeter. Consequently, the electrical output signal from block 57 is proportional to the measured mass flow.

Since the maximum torsion angle of the torque transducer measuring shaft, respectively the angle required to measure the maximum torque value is very small (0.20° .... 0.60⁰), and the reduction ratio achieved by the coupling of the two wheels 43 and 44 and transmitted by the coupling between the wheels 43 and 44 ensures the reduction of the rotation angle of the reaction tube 29, it results that the reaction tube 29, functionally requires a very small rotation angle to cover the entire measuring range Q_{m,minim} ...-Q_{m,maxim}.

Consequently, this type of reaction flowmeter is practically a flow meter without moving parts.

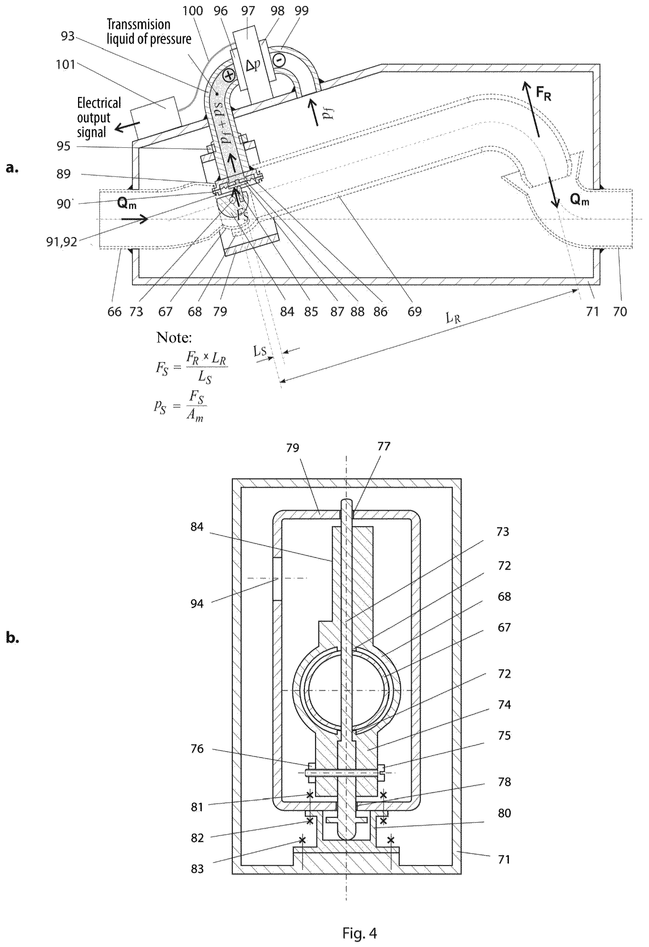

A third example of embodiment of a nonlinear reaction flowmeter without moving parts, not encompassed by the wording of the claims, is the one with the measurement of the reaction force by the differential measurement of the pushing pressure it produces (Fig. 4a, b).

The radial equidistance between the nozzle (spherical calotte) 67, corresponding to the inlet connection 66 and the nozzle (spherical calotte) 68 related to the reaction tube 69, is achieved constructively through two bosses 72, corresponding to the spherical calotte 68 of the reaction tube 69.

The bosses 72 are cylindrical and are placed vertically, up and down, around the vertical shaft 73.

In special situations, the bosses 72 can be replaced with a continuous circular crown, along the inner circumference of the spherical calotte 68.

The bosses 72, having a very small height and a small outer diameter, ensure the decreasing at minimum of the contact friction between the spherical calotte 67, corresponding to the inlet connection 66 and the spherical calotte 68, related to the reaction tube 69.

A rigorous positioning of the reaction tube 69 relative to the inlet connection 66 is ensured by the rigorously concentric positioning of the spherical calottes 67 and 68, performed by means of a vertical shaft 73.

The shaft 73 passes through both circular positioning holes, with which the spherical calotte 68 of the reaction tube 69 is provided, the holes being placed diametrically opposite in vertical plane, and through the two circular positioning holes, with which is provided the spherical calotte 67 of the inlet connection 66, holes placed in turn diametrically opposite, having the centers on the same vertical with the two previous positioning holes.

The design tolerances of the diameters of the two positioning holes of the spherical calotte 67 ensure minimum clearances between the calotte 67 and the vertical shaft 73.

In its turn, the vertical shaft 73 is stiffened relatively to a lower outer boss 74 of the reaction tube 69, respectively to its spherical calotte 68, through a locking system screw75 - nut 76. The boss 74 is cylindrical and placed in the plane vertical.

The rigorous positioning of the shaft 73 both horizontally and vertically, is achieved by providing two holes (bearings) 77 and 78 for its passage through the upper and lower walls of a support 79 of the reaction tube 69.The centers of two holes (bearings) 77 and 78 are rigorously placed on the same vertical, and thus constructively ensure both minimum horizontal clearance and minimum friction of the shaft 73.

The shaft 73 rests on a flange with a collar 80 which is stiffened both relative to the support 79, by a system screw 81 - nut 82, and to the housing 71 of the flow meter, by some screws 83.

In order to stiffen the reaction tube 69 with the shaft 73, the reaction tube 69 is provided at its entrance with two outer bosses 74 and 84 located vertically, and diametrically opposite.

In an upper outer boss 84, at a distance L_{S} from the center of the shaft 73, a pin 85 is rigidly embedded which, through its hemispherical end, is in permanent contact with a separating diaphragm 96 to which it permanently transmits the pushing force F_{S}, from the part of the reaction tube 69, as long as the fluid flows through it and implicitly the reaction force F_{R} is generated.

Since constructively the L_{R} / L_{S} ratio of the arms of the F_{R} and F_{S} forces is higher than1, it results that the force F_{S} has an amplified value compared to the value of the reaction force F_{R}.

A pin 85 presses a separation membrane 86, through a part 87, which directly takes over the force F_{S}. The diaphragm 96 is tightly tightened between the part 87 and a nut 88, by fully screwing them. Thus, the diaphragm 86 takes over the force F_{S}.

The separation diaphragm 96 is rigidly fixed to its outside, and sealed between some flanges 88 and 90 which are tightly together by a system of screws 91-nuts 92.

Consequently, on the face from the measuring fluid, on the separation diaphragm 96 acts both the static pressure p_{f} of the measuring fluid and the pushing pressure of the pin 95, respectively pₛ = F_{S} / Aₘ. (Aₘ being the area of the active surface of the diaphragm) determined by the pushing force F_{S}.

On the flange 88 is welded a nozzle 93 which passes through a hole 94 existing in the side wall of the support 79 and is stiffened against it by the complete screwing of a nut 95. The connection 93 is mounted rigidly and sealed against the housing 71 and connected to high pressure tap (+tap) 96 of a differential pressure sensor 97. Through the connection 93 is transmitted the pressure taken over on the other side of the separation diaphragm 96.

Functional transmission of the pressure taken over by the separation diaphragm 96, respectively the sum between the pressure pₛ determined by the pushing force F_{S} of the pin 95 and the static pressure p_{f} of the measuring fluid, to the sensor 97, is ensured by a liquid used for its transmission, liquid with which is completely filled, in advance, the volume between the separation diaphragm 96 and the sensitive element of the sensor 97.

At the low pressure tap 98 of the sensors 97 is connected the static pressure pf of the measuring fluid, taken up by a connection 99, which is rigidly mounted and sealed to the housing 71.

The sensor 97, ensures the fully rigorous measurement of the deferential pressure Δp, being provided structurally and with the function of its compensation with the temperature of the measuring fluid.

Sensor 97, for measuring the difference between the two pressures, in fact measures the pressure pₛ, because Δp = (p _{f} + pₛ) - p _{f} = pₛ.

Thus, the sensor 97, indirectly measures the pushing force F_{S}, implicitly the reaction force F_{R}, (because, according to the previous ones, pₛ = (L_{R} xLs-1 x Aₘ-1) x F_{R} = kx F_{R}, where k = constructive constant of the flow meter) and consequently measures the mass flow Qₘ. The output signal from the differential pressure sensor 97 is applied via a cable 100 to an electronic block 101.

In the electronic block 101 is stored previously, following the experimental calibration on the rig of the reaction flowmeter, its specific correspondence Δp = Δp (Qₘ), between the pressure difference measured by the sensor 97 and the mass flow Qₘ.

It follows that the electrical output signal from the electronic block 101 renders the value of the measured mass flow Qₘ.

Since the pressure transmitting liquid from the separation diaphragm 86 to the pressure transducer 97 is practically incompressible, the displacement of the diaphragm 86, implicitly of the pin 85, is therefore particularly small, almost zero, for measuring the entire range Qₘᵢₙ ..... Qₘₐₓ . By default, the displacement of the reaction tube 69 is also extremely small.

Consequently, this type of flowmeter is practically a flowmeter without moving parts.

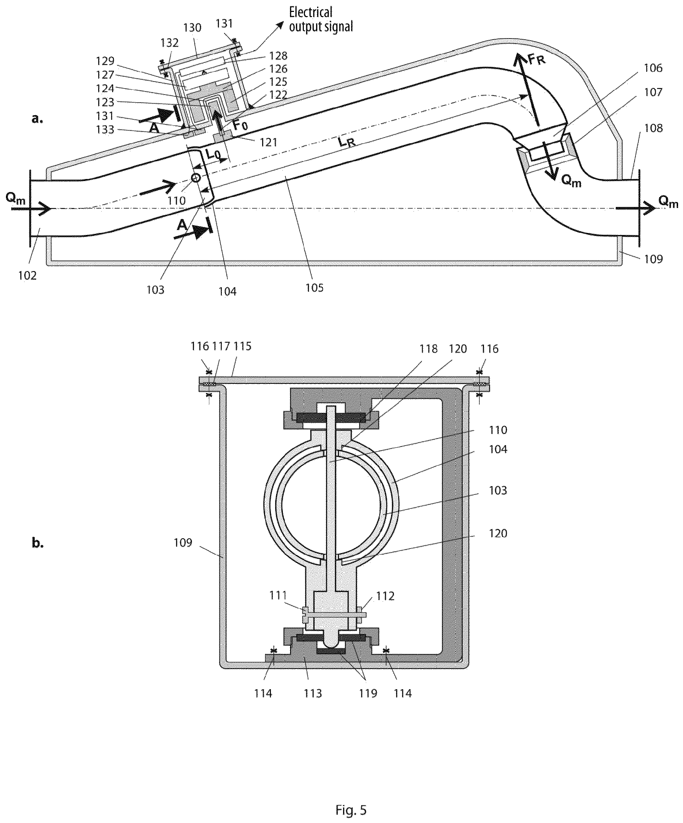

Another example of embodiment in accordance with the claimed invention, of a reaction flowmeter without moving parts with the non-linear characteristic relationship is that of the reaction flowmeter with direct measurement of the output pushing force by its electromagnetic balancing-Fig.5a, b.

The principle of the configuration of the reaction flowmeter is to ensure the indirect measurement of the reaction force F_{R} by measuring its output pushing force F₀, which is proportional to it.

The output pushing force F₀ is measured by its electromagnetic balancing.

The measuring fluid enters in the flowmeter through the inlet connection 102, terminated with a nozzle 103 which enters in a nozzle 104 of a reaction tube 105.

The fluid flows through the reaction tube 105 and the convergent outlet nozzle 106, respectively, and is then taken up by a nozzle 107 of the outlet connection 108, being discharged from the flowmeter without turbulence.

The input 102 and the output 108 connections are horizontal collinear connections and are rigidly and tightly fixed to the flowmeter housing 109.

The reaction tube is provided with a shaft 110, perpendicular to it and rigid with it, by fixing it with the screw 111 and the nut 112. The shaft 110 rests on a support 113, stiffened in relation to a housing 109 by means of some screws 114.The housing 109 it is closed by the flowmeter cover 115 with the screw-nut system 116 which tightens the gasket 117.

The rigorous positioning of the shaft 110 ensures, on the one hand, the rigorous concentric radial equidistance between the nozzles103 and 104 and, on the other hand, the insignificant friction with the upper bearing 118 and the lower bearing 119.

The equidistance between the nozzles 103 and 104 is constructively achieved by two small inner bosses 120 of the nozzle 104 of the reaction tube, placed at the top and bottom of the vertical shaft 110. Thus is ensures, on the one hand, an insignificant friction, between the nozzles 103 and 104, which have a rigorous concentric positioning and, on the other hand, the mobility of the potential rotation of the reaction tube 105, relative to the vertical axis of the shaft 110, without any inconvenience.

The reaction tube 105 is provided with the outer boss 121. In this boss, at a distance L0 from the shaft axis, a pin 122 is rigidly incorporated.

At the pin end 122 is rigidly fixed the magnet 123 which is placed inside a small closed tube 124.

The subassembly (pin 122 and magnet 123) can move freely relative to the closed tube 124.

The tube 124 is welded to the housing 109, being a common part thereof.

Outside the tube 124, around it is placed an annular magnet 125 with a free movement relative to the tube 124, having the inner hole with a larger diameter suitable relative to outer diameter of this.

Due to the magnetic coupling between the magnets 123 and 125, any variation in the value of the force F_{O}, followed by the tendency of the pin 121 to move (respectively of the inner magnet 123), determines the movement tendency of the outer magnet 125.

The magnet 125 is rigidly fixed to its support 126. The support is constructively fixed to the moving part of the force sensor 127 and permanently transmits it the pushing force, received by the magnet 125 (respectively by the inner magnet 123), with the instantaneous value F₀.

The force sensor 127, which receives the pushing force F₀, at any very small tendency to move its moving part, (corresponding to any small variation of the force F₀), ensures its electromagnetic balancing, and at the same time measuring this force.

The electrical output signal of the sensor 127, being proportional to the value of the measured force F₀, is applied to the electronic computing block 128.

The outer ring magnet 125, together with its support 126, the force sensor 127 and the flow computing block 128, are properly positioned inside a awn housing 129, which is closed by the cover 130 with the screw and nut system 131, which tightens the gasket. 132

The housing 129 is not in contact with the measured fluid, being rigidly fixed (for example by welding) to the housing 109, which, on the contrary, is permanently in contact with the fluid.

The force sensor 127 is rigidly fixed to the housing 129, in a rigorous position, for to ensure its correct functional positioning in relation to the system of taking the pushing force, achieved by the magnetic coupling of the two magnets 123 and 125.

The block 128 calculates the corresponding value of the reaction force F_{R}, according to the known analytical relationship between the forces F_{R} and F₀.

On this basis, block 128, where the calibration curve Qₘ = Qₘ (F_{R}) was previously stored, ensures the calculation of the instantaneous value of the mass flow Qₘ compensated with T and P, the parameters measured by sensors 133 and 134, corresponding to the measured value of F₀ (respectively F_{R}) and generates an electrical output signal, proportional to the respective measured value of Qₘ.

The movement of the moving part of the sensor 127 and implicitly of the pin 122 is very small, corresponding to the measurement of the entire range Q_{m, min} ... Qₘ, ₘₐₓ of the reaction flowmeter.

Correspondingly, the displacement of the reaction tube 105 is very small and, consequently, this type of reaction flowmeter is considered without moving parts.

A last example of realization of reaction flowmeter without moving parts, in individual configuration, in accordance with the claimed invention, is the one with direct measurement of the output force, with load cell with strain gauge.

This type of reaction flowmeter has the same configuration as the that shown previously in Fig. 5a, b and the same mode of operation, with the difference that the item 127 is a load cell with strain gauge and not one with force measurement by its electromagnetic balancing, the rest of the operation being identical.

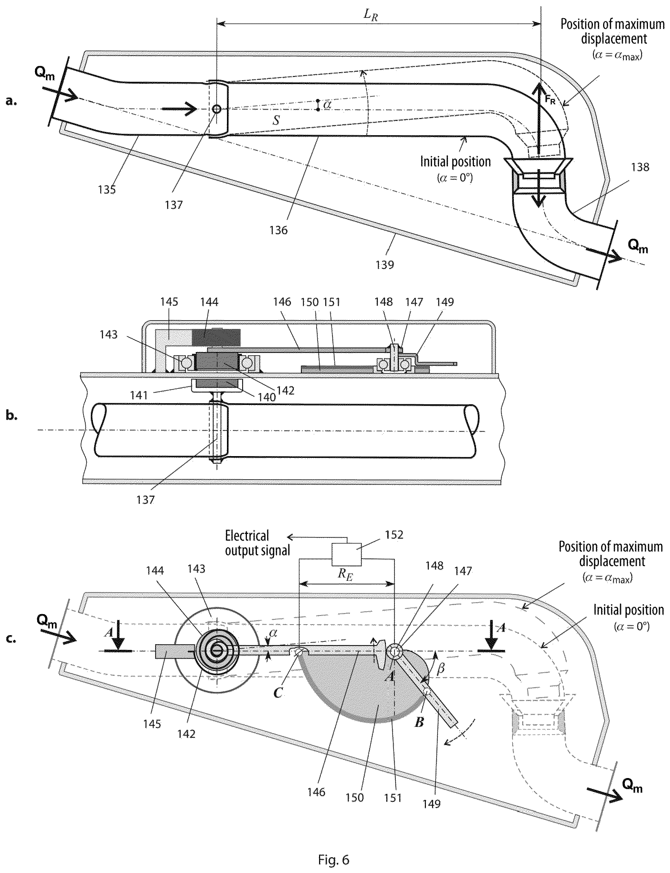

The following is an example of the realization of the reaction flow meter with linear functional dependence "output electrical voltage - measured flow". According to Fig. 6a, b, c the measuring fluid enters in the flowmeter through the inlet connection 135, then passes through the reaction tube 136, with which it is articulated through the shaft 137 and then exits through the outlet connection 138.

The mass flow rate Qₘ determines the generation of a reaction force F_{R}, which tends to rotate the reaction tube 136 about the shaft 137, the arm of the force F_{R} being L_{R}.

On the housing 139 of the flowmeter, the connections 135 and 138 are fixed rigidly and Qₘ the housing 139 of the flow meter, the connections 135 and 138 are fixed rigidly and tightly sealed.

Corresponding to the variation of the reaction force at an F_{R} value, under its effect, the reaction tube 136 is rotated by it. The shaft 137, being rigid with the reactance tube 136, rotates at an angle a, together with the magnet 140, which is stiffened with respect to the shaft 137 of the bush 141.

The magnet 142 inside the housing 139 of the flowmeter determines, by magnetic coupling, the rotation with the same angle α of the outer magnet 142, which is located outside the housing 139, being rigidly mounted to the inner ring of the bearing with bearing 143.

The bearing 143 is rigidly mounted on the housing 139.

Rotation of the outer magnet 142 stops at the angle α, because this is the twisting angle of the helical spring 144, for which the elastic moment of resistance M_{arc} = Cₐᵣₑ x α, developed by it balances the twisting moment M = F_{R} x L_{R}, determined by the instantaneous value of the reaction force F_{R}. The helical spring 144 is fixed with one end to its support 145, and with the other end to the rod of the circular sector 146, which in turn is fixed rigidly, by gluing, on the outer magnet 142, thus rotating in turn with the angle α.

By mechanical coupling (friction or gear) the crown of the circular sector 146 transmits its rotational movement to the roller 147, implicitly to the shaft 148, to which it is rigidly fixed.

The radial resistive arm 149, is rigidly fixed to the roller 147, arm which is a rod made of electrically insulating material on which is uniformly wound an electrical resistance made of a wire with very high resistivity which is practically not influenced by the variation of ambient temperature (e.g. kanthal, manganin etc.).

Given the ratio D_{c} / Dᵣ> 10 between the diameter D_{c}, corresponding to the crown of the circular sector 146, and the diameter Dᵣ, of the roller 147, the mechanical coupling is configured so that for the rotation with the maximum angle α max of the reaction tube (corresponding F_{R}, max, respectively Qₘ, max) to correspond the angle βₘₐₓ = 180⁰, of rotation of the resistive arm 149 with respect to the cam 150.

The cam 150 is rigidly placed on the cover of the housing 139 and has an electrical conductor 151 fixed to its entire outer contour.

The radial resistive arm 149, is in permanent contact with the conductor 151, the contact point being the one corresponding to the length R of the cam radius, length corresponding to the value of the rotation angle β.

By default, the value of the electrical resistance R_{E} (β) of the resistive arm 149, corresponding to the rotation angle β is determined as being between its central point (denoted by A) and the point B of contact with the electrical conductor 151, related to the radius R (β) corresponding to the angle β.

The electrical resistance RE (β) between points A and C is detected by the electronic block 152, point C being one end of the electrical conductor 151, and the electrical equivalent of point B.

After processing according to the analytical relationship, already stored in its software, block 152, it emits the electrical output signal of the flowmeter.

Because the angle of rotation β of the resistive arm, respectively of the driven roller 147, is proportional to the angle of rotation α of the circular crown 146, (which is proportional to the angle of rotation of the helical spring 144, which in turn is proportional to the twisting moment determined by the force F_{R}), it results the dependence ${R}_{E} = C x {β}^{1 / 2} = {C}_{1} {{xF}_{R}}^{1 / 2}$

In consequence: ${F}_{R} = 1 / {C}_{1} x {{R}_{E}}^{2}$

On the other hand, the general functional equation of reaction flowmeters has the expression: ${F}_{R} = \left(k x {ρ}^{- 1}\right) x {{Q}_{m}}^{2}$

Replacing the specific expression of F_{R} in the general functional relation of reaction flowmeters, it results: $1 / {C}_{1} x {{R}_{E}}^{2} = \left(k x {ρ}^{- 1}\right) x {{Q}_{m}}^{2}$ respectively: ${R}_{E} = {\left(k x {ρ}^{- 1} x {C}_{1}\right)}^{1 / 2} x {Q}_{m}$

By supplying the electrical resistance R_{E} with a constant current of a very small value of approximately 1mA results an electrical voltage proportional to R_{E} which is measured in the electronic block by an electrical voltage transducer.

It follows that is linear the dependence between the output signal of block 152, respectively the output signal of the flowmeter, which is proportional to R_{E}, and to the measured flow Qₘ.

The effect of linearization is the increasing of the measurement interval of the reaction flowmeter, characterized by the ratio T = Q_{m, max} / Q_{m, min} to the value T².

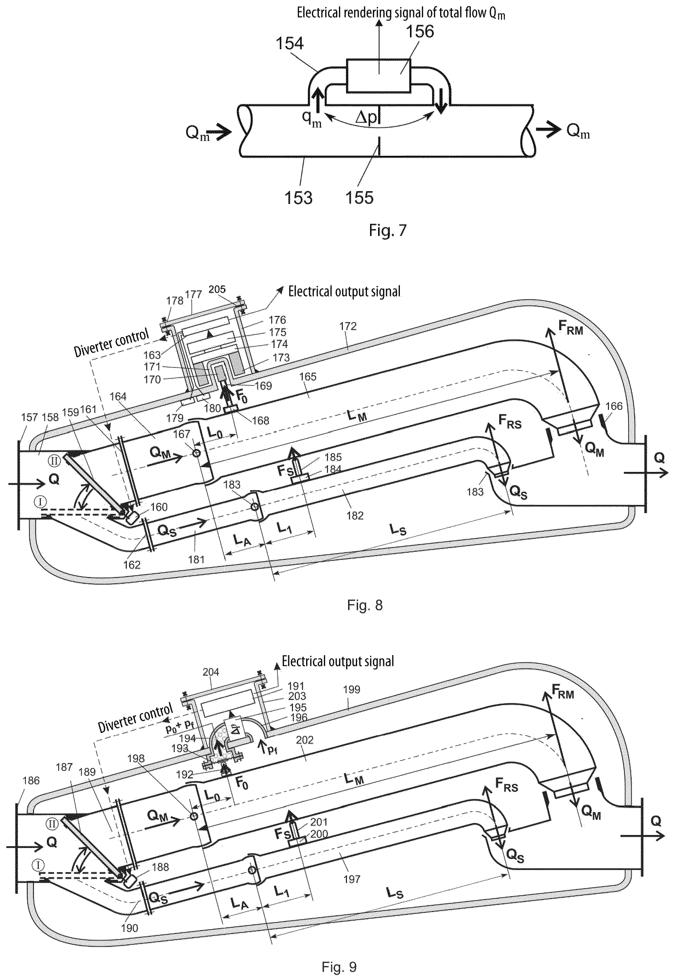

According to the invention, an example of embodiment of the bypass type reaction flowmeter is shown in Fig. 7, consisting in the placement in bypass montage of two pipes, respectively the main pipe 153 and the secondary pipe 154. On the main pipe is placed a fluidic resistance 155 (achieved by an orifice plate, nozzle, or short Venturi tube).

Through the secondary pipe 154 (with small diameter) is taken the flow rate qₘ, of a small value, from the total flow rate Qₘ, with high value, the inlet flow rate in the main pipe 153 (with large diameter).

It is necessary to the hydraulic balance of the pressure drops on the two branches of the bypass (main pipe, respectively secondary pipe).

By establishing, as previously presented, the relationship between flow rates qₘ and Qₘ, this configuration ensures the determination, by computing, and implicitly the measurement of the total flow rate Qₘ, by the effective measurement only of the secondary flow rate qₘ by the reaction flowmeter 156, placed on the secondary pipe 154.

The reaction flowmeter 156 can be achieved in any of the construction variants indicated above.

According to the invention, further are presented the method and an example of a reaction flowmeter without moving parts and extended flow measurement, with the measurement of the output pushing force, by its electromagnetic balancing - Fig.8.

According to the claimed method, called the 'extended flow measurement method', the flowmeter, called the 'extended reaction flowmeter', ensures, through its configuration, the functional and implicitly constructive correlation between the two reaction flowmeters that make it up.

In this sense, the extended flowmeter consists of a specific coupling of a "main flowmeter" with a "secondary flowmeter", having their flow ranges with correlated values, according to the provisions of this method.

As shown in Fig. 8, the measured flow rate Q enters in the extended reaction flowmeter through its inlet connection 157, consisting of the inlet connection 158 of the jet diverter 159, placed at the inlet of the flowmeter.

The jet divider 159, being actuated by its solenoid 160, switches the flow of the incoming fluid, either at the outlet 161, to the "main flowmeter" (corresponding to position I of the diverter), or at the outlet 162, to the "secondary flowmeter" (corresponding to position II of deviator) and vice versa, according to the order received from the electronic block 163.

It is considered that the diverter 159 is initially controlled in Position I and, consequently, the introduced fluid is directed to flow only through the "main flow meter".

The 'main flowmeter' consists of the immobile inlet tube 164, the reaction tube 165 that generates the reaction force and the exhaust tube 166.

The main reaction tube 165 is provided with the shaft 167, which is perpendicular to it and rigid with respect to it, ensuring the possibility of rotating the tube 165 with respect to the vertical axis of the shaft.

The reaction force F_{RM}, generated by the reaction tube 165, acts along the axis of this elbow at a distance L_{M} to the axis of the shaft.

The main reaction tube 165 is provided with boss 168. In this boss, at a distance L₀ from the shaft axis, the pin 169 is rigidly incorporated. At the end of the pin 169 is rigidly fixed the magnet 170, which is implicitly positioned inside a small closed tube. 171.

The assembly formed by the pin169 and the magnet 170 has the possibility to move relative to the closed tube 171, which is configured as part of the housing 172, of the extended reaction flowmeter.

Outside the tube 171, is placed an annular magnet 173, which can move freely relative to it, its central hole having a corresponding diameter larger than the outer diameter of the tube 171.

The magnet 173 is rigidly fixed to its support 174 which, in turn, is constructively fixed to the moving part of the force sensor 175, permanently transmitting to it the pushing force F₀, received by magnetic coupling from the magnet 170. The value of the pushing force F₀,of output from the flowmeter, is proportional to the reaction force F_{RM}. The force sensor 175 receives the output pushing force F₀ (with the value F₀^{I} correspondin^{g} to the position I of the jet diverter 159) and according to its principle of operation, at any very small tendency of displacement of its moving part (corresponding to a small variation of force F₀^{I}), ensures electromagnetic balancing and its measurement at the same time. Consequently, the electrical output signal of the force sensor 175 is proportional to the value of the pushing force F₀^{I} and is applied to the electronic block 163.

The ring magnet 173, its support 174, the force sensor 175 and the electronic block 163 are properly positioned in the outer box of the extended reaction flowmeter, which has its own housing 176, which is closed by the cover 177 with the screw-nut system 178, by tightening the gasket 205.

The housing 176 is not in contact with the measured fluid being rigidly fixed to the housing 172 of the flowmeter, which, on the contrary, is permanently in contact with the measured fluid.

The force sensor 175 is rigidly fixed to the housing 176, in a corresponding position relative to the system for receiving the pushing force, ensuring its rigorous measurement.

Electronic block 163 calculates the value of the reaction force F_{RM}, according to the known relationship between the forces F₀^{I} and F_{RM}, and then the corresponding value of the measured main flow rate Q_{M}, using the calibration curve Q_{M} = Q_{M} (F_{RM}), previously stored in its memory.

The QM flow rate is compensated with the pressure P and the temperature T, the parameters measured by sensors 179 and 180.

This is the first of the two functions of block 163, because as previously presented, this block has two simultaneous functions, correlated with each other: the calculation of the instantaneous flow, respectively the control of the position of the diverter 159.

In this sense, the electronic block 163 performs its second function of controlling and switching the position of the diverter 159, according to the algorithm of ensuring the operation of the extended reaction flowmeter, respecting the functional correlations presented in Table 1 below:

**Table 1**

| The value of the measured flow Q | Jet diverter status |
|---|---|
| Q_{Smin}_Q_{Mmin} | Position II |
| Q_{Smax}_Q_{Mmax} | Position I |
| Q_{Mmin}↑ (Only for the upward tendency of the flow rate ) | Switching from Position II to Position I |
| Q_{Smax} ↓ (Only for the downward tendency of the flow rate) | Switch from Position I to Position II |

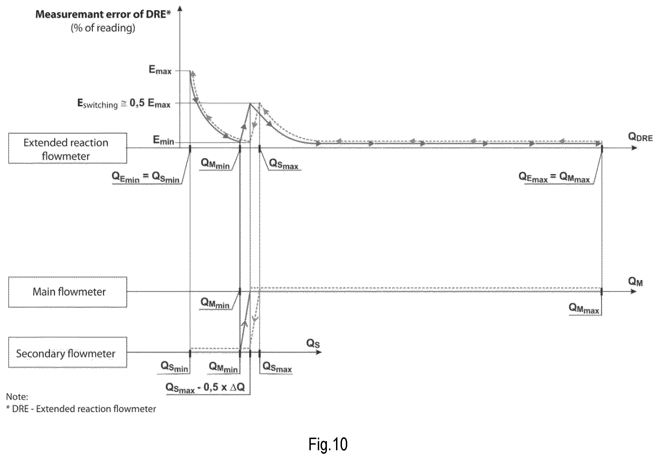

The complete continuity of the flow measurement along the entire measuring range of the extended reaction flowmeter is achieved by ensuring of a very small overlap zone ΔQ of the measuring ranges of the two component flowmeters of the extended reaction flowmeter ("main flowmeter" and "secondary flow meter"), as shown in the diagram shown in Fig.10.

The overlapping zone ΔQ has a very small extension, respectively: $ΔQ = Q _ \left(S max\right) - Q _ \left(M min\right) = c \times Q _ \left(M max\right)$ where: c = 0.01 ... 0.025

Following this functional algorithm, the electronic block 163 calculates, on the one hand, the instantaneous value of the measured flow rate Q and, on the other hand, according to this value commands the position of the diverter 159.

Thus, is measured the entire flow range (Q_{Smin} ... Q_{Mmax}), which is marked with a thickened line in the diagram, corresponding to the extended reaction flowmeter.

The overlapping zone ΔQ of the ranges of the two component flowmeters, practically completely covers the switching inertia zone of the diverter 159, achieving both the continuity of the flow measurement over the entire range of the flowmeter, including the overlapping zone ΔQ, and a moderate value of measurement error for this zone, with a value of up to 50% of the maximum value of the Eₘₐₓ error, respectively: ${E}_{switching , max} \left(% o.r.\right) 0.5 {x}_{Emax} \left(% o.r.\right)$

In this respect, the block 163 will keep the diverter 159 in position I, only when the measured flow rate values by the "main flowmeter" fall within the range Q_{Mmax} ... Q_{Smax}.

When the value of the measured flow by the "main flowmeter" decreases and tends to reach the value Q_{M} = Q_{Smax}, the electronic block 163 commands the switching of the diverter 159 from its initial position I to position II, and now the introduced fluid is directed to flow only through the "secondary flowmeter", the flow measurement being continued only by this.

The 'secondary flowmeter' consists of the immobile inlet tube 181, the reaction tube 182 and the exhaust tube 183.

The fluid discharge tubes 166 and 183 are constructively jointed into a single piece which constitutes the output connection of the extended reaction flowmeter.

The secondary reaction tube 182 is provided with the vertical shaft 183, which ensures the potential rotation mobility of the tube relative to the shaft axis.

On the secondary reaction tube 182 is placed the boss 184. The pin 185 is rigidly incorporated in this boss, at a distance L₁ from the shaft axis.

The relative positioning between the main reaction tube 165 and the secondary reaction tube 182 is performed constructively, so that the pin 185 is in permanent contact with the main reaction tube 165 and pushes it with the force F_{S}, for as long as the diverter 159 it is in position II, and the flow measurement is performed by the "secondary flowmeter".

In this way, under the effect of this force, the pin 169 related to the main reaction tube will press with a force, having the amplified value F₀^{II}, according to the provisions of those specified above.

The pushing force F₀^{II}, is proportional to the force F_{S} and implicitly to the measured flow _{QS}.

Similar to the previous situation, in which the diverter 159 is in Position I, the pushing force F₀ ^{II,} is measured by the sensor 175, its value being proportional to that of the reaction force F_{S}, implicitly with the measured flow Q_{S.} Functionally, as specified above, it is necessary to ensure the requirement F₀ₘₐₓ^{I} = F₀ₘₐₓ^{II}.

The output signal of the sensor 175 is applied to block 163 which, on the one hand, calculates the value of the instantaneous flow rate Q_{S} (compensated with P and T) and, on the other hand, controls the position of the diverter 159, according to the algorithm shown in table 1, respectively:
- if: Q_{Smin} ≤Q_{S} <Q_{Mmin} the diverter is held in the same position II and the flow measurement is provided by the 'secondary flowmeter'
- if the Q_{S} increases and tends to reach the value Q_{S} = Q_{Mmin}, the diverter is switched from position II to position I and thus the flow measurement is continued by the 'main flowmeter'.

It should be noted that because the overlap zone of the measurement ranges of the two flowmeters ("primary" and "secondary") is very small, of ΔQ = Q_{Smax} - Q_{Mmin} = (0.01 ... 0.025) x Q_{Mmax}, the switching of the diverter does not it practically bothers the flow measurement.

Another example of embodiment the extended reaction flowmeter, is the one with the differential measurement of the pushing output force, presented in Fig.9.

The configuration of this type of flowmeters is largely similar to that of the extended reaction flowmeter with the measurement of the output pushing force, by its electromagnetic balancing.

The essential difference, compared to the previous example, consists in the method of measuring the output pushing force and implicitly in the system of taking over of force.

Also, it is mention that both the principle of the measurement method in question and the corresponding specific configuration of the system for taking this force, respectively the related functional equation, have already been indicated previously in the presentation "reaction flowmeter with reaction force measurement, by the differential measuring of the pressing pressure it produces".

Consequently, only the specific aspects of the operation of the assembly of this type of extended reaction flowmeter are presented below.

According to Fig. 9, the entered fluid through the connection 186 of the diverter 187, according to the command of its solenoid 188, is switched by the diverter, either to its outlet 189, to the "main flowmeter" (corresponding to position I of the diverter), or to its outlet 190 to "secondary flowmeter" (corresponding to the position II of the diverter) and vice versa, depending on the order received from the electronic block 191.

It is considered that the diverter 187 is initially controlled in position I and, consequently, the fluid is directed to flow only through the "main flowmeter".

According to the general functional algorithm, indicated in the example of the previous embodiment, the operation of this type of extended reaction flowmeter, respectively of the "main flowmeter" for this situation (corresponding to position I of the deviator 187) is similar to that of the type of flowmeter presented previously.

A first essential difference consists in the way of taking the force F₀^{I} from the pin 192.

Now the pin presses on one side of the separating diaphragm 193 with the force F_{0I}, causing a pushing pressure p₀ on its opposite face.

The pressure p₀, to which is permanently added the static pressure pf of the measured fluid, is taken over by the transmission liquid, which completely fills the connection 194, and their sum is applied to the high-pressure inlet of the differential pressure sensor, 195.

The influence of the static pressure pf of the measured fluid is permanently canceled by its application, at the low-pressure inlet of the differential pressure sensor 195, through the connection 196.

Thus, the sensor 195 ensures the differential measurement of the pushing pressure p₀, respectively its compensation with the temperature and pressure of the measured fluid, the sensor being provided with this additional function.

The output signal of the sensor 195, which shows the value of the pushing pressure p, is applied to the electronic block

The electronic block 191, starting from the calculation of the value of the pushing force F₀, corresponding to the reaction force F_{RM} (which determined the occurrence of the pressure p₀) ensures the calculation of the instantaneous value of the measured flow Q_{M}, using the calibration curve Q_{M} = Q_{M} (F_{RM}), previously stored in his memory.

According to the operation algorithm of extended reaction flowmeters, DRE, presented in table 1, block 191 will keep the diverter 187 in position I, only when the flow rate values Q_{M}, measured with the "main flowmeter", fall within the range (Q_{Mmax}... Q_{Smax}).

When the value of the flow rate, measured by the "main flowmeter", decreases and tends to reach the value Q_{M} = Q_{Smax}, the electronic block 191 commands the switching of the diverter 187 from its initial position I to position II and now the entered fluid is directed to flow only through the "secondary flowmeter", the flow measurement being continued only by As previously presented, the shaft 196 of the secondary reaction tube 197 is functionally positioned to the right of the shaft 198 of the main reaction tube 199, at a distance L_{A}.

On the secondary reaction tube 197, the pin 201 is fixed on the boss 200, at a distance L₁ from the axis of the rotating shaft of the tube 197.

The relative positioning between the main reaction tube 202 and the secondary reaction tube 197 is performed constructively, so that the pin 201 to be in permanent contact with the main reaction tube 202 and to push it with force F_{S} for as long as the diverter 187 is in position II, and the flow measurement is provided by the secondary flowmeter.

In this way, under the effect of this force F_{S}, the pin 201 of the main reaction tube 202 will press the separation diaphragm 193 with a force having the amplified value F₀^{II}, as shown previously.

The Δ p sensor 195 and the electronic block 191 are placed inside a box 203, tightly closed with the lid 204, not being in contact with the measuring fluid and being rigidly fixed on the housing 199, which is in permanent contact with the measuring fluid.

Continuing, the taking over and the measuring of this pushing force F₀^{II}, are performed identically by the differential pressure sensor, 195. Also the calculation by the electronic block 191 of the measured flow rate value is performed identically as in the situation presented above, corresponding to the position I of the diverter 187.

According to the above, it is necessary to ensure the requirement F₀ₘₐₓ^{I} = F₀ₘₐₓ^{II}.

Following the same functional algorithm, like that the type of extended reaction flowmeter shown above, depending of the value of the measured flow rate Q_{S}, the electronic block 191 controls the position of the diverter 187, as follows: - for Q_{Smin} ≤Q_{S} <Q_{Mmin}, the diverter is held in position II, and the flow measurement is continued by the "secondary flowmeter"- if Q_{S} increases and tends to reach the value Q_{S} = Q_{Mmin}, the diverter 187 switches from position II to position I and thus the flow measurement is continued by the 'main flowmeter'.

As a general remark, it should be mentioned that, since the overlap zone of the flow measurement ranges of the two flowmeters ("primary" and "secondary") is very small, respectively ΔQ = Q_{Smax} -Q_{Mmin}-= (0.01... 0.025) × Q_{Mmax}), the switching of the diverter practically do not bother the flow measurement.

The advantages offered by the measurement method and the reaction flowmeter without moving parts, which are the object of this invention are:
- special flexibility, provided by the flow measurement method by measuring the reaction force, or its effects, to ensure the configuration of a wide diversity of types of reaction flowmeters without moving parts, destined for closed pipes, by solutions with: the nonlinearity of dependence between the output parameter and the flow rate, its linearization, respectively the coupling in bypass of such a flowmeter with a fluidic resistance, the extension of the flow measurement range, by coupling of such flowmeters, correlated to work successively depending on the measured flow rate value;
- direct measurement of mass flow rate;
- universality of use for the flow measuring both for liquids and gases or steam;
- simplicity of the configuration, and implicitly of the execution, of the fluid flow route through the flowmeter
- lack of wear between the parts in contact, without movement (fixed inlet tube - reaction tube)
- does not require an additive external energy consumption to ensure the operation of the reaction system for measuring the flow rate, consisting of the fixed inlet tube and the reaction tube;
- obtaining of some high values of the ratio Qₘ,ₘₐₓ / Qₘ, ₘᵢₙ, optimally correlated with the interval of values of the maximum permissible errors of flow measurement
- robustness to the action of gas bubbles contained in multiphase fluids
- eventual solid particles in the measuring fluids do not affect the flow measurement
- ensures the permanent self-cleaning of the curved zones of the fluid flow path, by the functional use of some adequate values of the fluid flow velocity through the flowmeter
- reduced expenses regarding: the cost of flowmeters, their installation and related maintenance

## Claims

1. Reaction flowmeter without moving parts, made up of a primary element (EP) constituted by the association between a reference block (BR), realized in the form of a fixed horizontal access tube, and a sensitive block (BS) made as a curved quasi-immobile tube called immobile reaction element, **characterized in that** a sensitive element (ES) used for the flow measurement achieves the measurement of the reaction force F_{R}, exerted on the sensitive block (BS), by sensors for direct measurement of its output pushing force F₀, foree-that are placed outside the measuring fluid and are actuated by magnetic coupling, and which together with said elements of the reaction flowmeter are constituting: a flowmeter ir individual configuration functioning on a nonlinear dependence " reaction force F_{R} - measured flow" and based on the direct measurement of the output pushing force Fₒ, in two distinct functional solutions respectively, by electromagnetic balancing of Fₒ, or with a load cell with a sensor of strain gauge type; or a flowmeter in bypass type configuration , obtained by placing the reaction flowmeter without moving parts on a secondary conduit, in parallel with a main pipe provided with a fluidic resistance; or respectively, a flowmeter in extended configuration, made as a functional connection with an intercorrelated operation, between two reaction flowmeters, each having its own primary element, but using successively a single common secondary element, that contains the force sensor directly measuring the output pushing force F₀ by electromagnetic balancing, and having the two flow measurement ranges so correlated that, the values of one are a continuation of the other, with a very small overlap between them.

2. Reaction flowmeter without moving parts according to claim 1, wherein for the flowmeter in the individual configuration the measuring fluid enters in flowmeter through an inlet connection (102), ended with a nozzle (103) which enters in a nozzle (104) of a reaction tube (105), the fluid flowing through the reaction tube (105) and respectively a convergent outlet nozzle (106), then it is taken over by a nozzle (107) of a outlet connection (108), and the reaction tube is provided with a perpendicular shaft (110), rigidly fixed , and the reaction tube (105) is provided with an outer boss (121) in which at a distance L₀ of the shaft axis, a pin (122) is rigidly incorporated and rigidly fixed to an inner magnet (123) placed inside a small closed tube (124) so that the subassembly formed by the pin (122) and the inner magnet (123) can move freely in relation to the closed tube (124) welded to a housing (109), and outside the closed tube (124), around it, is placed an outer annular magnet (125) with a free movement with respect to the closed tube (124), so that due to the magnetic coupling between the inner magnet (123) and the outer magnet (125), any variation of the force F₀, followed by the moving tendency of the pin (121), respectively of the inner magnet (123), determines the moving tendency of the outer magnet (125), rigidly fixed to a support (126) constructively fixed to the movable part of a force sensor (127) and to which it permanently transmits the pushing force, received by the outer magnet (125) respectively by the inner magnet (123), having the instantaneous value F₀ and thus that the sensor (127), materialized as a force sensor or a load cell with strain gauge type sensor which receiving the pushing force F₀, ensures its measuring, either by its electromagnetic balancing or with a load cell with strain gauge, respectively, and further, the electrical output signal of the sensor (127), proportional to the value of the measured force F₀, is applied to an electronic computing block (128) which calculates the corresponding value of the reaction force F_{R}, according to the known analytical relation between the forces F_{R} and F₀, and the block (128), having the calibration curve Qₘ = Qₘ (F_{R}) previously stored, provides accordingly the calculation of the instantaneous value of the mass flow Qₘ compensated with temperature T and pressure P, measured by sensors (133) and (134) corresponding to the measured value of F₀, respectively F_{R} and generates an electrical output signal, proportional to the respective measured value of Qₘ.

3. Reaction flowmeter without moving parts according to claim 1, wherein for the flowmeter in extended configuration, with the measurement of the output pushing force by electromagnetic balancing, the measured flow rate Q enters through an input connection (157), consisting of the input connection (158) of a jet diverter (159), placed at the inlet of the flowmeter, the jet diverter (159), being actuated by a solenoid (160), switches the flow rate of the incoming fluid, either at an outlet (161), to the "main flowmeter" corresponding to position I of the diverter, or at an outlet (162), to the "secondary flowmeter", corresponding to position II of the diverter and vice versa, according to the command received from an electronic block (163) so that if the diverter (159) is initially controlled in Position I and, consequently, the fluid flows only through the "main flowmeter", which consists from a immobile inlet tube (164), a reaction tube (165) that generates the reaction force and an exhaust tube (166), the main tube (165) being provided with a shaft (167) perpendicular to it and rigid towards it, ensuring the possibility of rotating the tube (165) relatively to the vertical axis of the shaft, and the reaction force F_{RM}, generated by the reaction tube (165), acts at a distance L_{M} from the axis of the shaft, and the main reaction tube (165) is provided with a boss (168) in which at a distance L₀ from the shaft axis, a pin (169) is rigidly embedded at the end of which is fixed rigidly a magnet (170) positioned inside a small closed tube (171), the assembly consisting of the pin (169) and the magnet (170) being able to move free relatively to the closed tube (171), and outside the tube (171), is placed an annular magnet (173), which can move freely relative to it, rigidly fixed to its support (174) which, in its turn, is constructively fixed to the movable part of a force sensor (175), permanently transmitting to it the output pushing force F₀, received by coupling magnetic from the magnet (170) and proportional to the reaction force F_{RM} and the force sensor (175) receives the output pushing force F₀ with the value F₀^{I}, corresponding to the position I of the jet deflector (159) ensuring electromagnetic balancing and its measurement, consequently, the electrical output signal of the force sensor (175) is proportional to the value of the pushing force F₀^{I} and is applied to an electronic block (163) which calculates the value of the reaction force F_{RM}, according to the known relationship between the forces F₀^{I} and F_{RM}, and then the corresponding value of the measured main flow rate QM, using the calibration curve Q_{M} = Q_{M} (F_{RM}), previously stored in its memory.

4. Flow measurement method based on the reaction flowmeter without moving parts, according to claim 1, **characterized in that** it involves completing the following steps:
Step 1- establishing for technical reasons related to the nature of the measured fluid, the value of the flow rate and availability, of the type of specific configuration used by the flowmeter;
Step 2. - introduction of the fluid with the measuring flow rate Qₘ = A xv xρ in the flowmeter through a reference block BR ended with a convergent nozzle which constructively ensures the functional constancy, with respect to flow rate variation, of the flow area value A = X_{R} constituting the characteristic parameter X_{R} of the flowmeter, determining the highlighting of the variable parameter X_{V} = v of the flowmeter, respectively the fluid velocity v, variable with the flow rate
Step 3 - taking over the fluid velocity v as the input parameter of the sensitive block BS of the flowmeter and obtaining at its output a reaction force F_{R} due to its specific shape of a quasi-immobile horizontal tube (2) bent at 90⁰ reaction element, the fluid being discharged from the flowmeter by taking over, without contact, by its outlet connection, which is collinear with the inlet connection;
Step 4 -taking over and measuring the characteristic parameter X_{C} of the flowmeter, on the basis of which the flow rate is computed, directly or by multiplication with a proportionality ratio, through solutions specific to the type of flowmeter configuration:
A. in individual configuration with nonlinear dependence of the output parameter - measured flow rate
- the reaction force;
B. in bypass configuration
- the ratio between the secondary mass flow rate measured on a secondary conduit by the reaction flowmeter without moving parts and the main mass flow rate flowing through a main conduit restricted by a fluidic resistance;
C. in extended configuration with the measurement of the output pushing force by electromagnetic balancing
- the value of the switching flow rate of the flow measurement from one flowmeter to another, by means of a jet diverter, between the measurement ranges of the two component flowmeters, so correlated that one is practically a continuation of the other, in function of which intervenes an intermediate parameter of flow rate calculation specifically to the flowmeter in operation;
Step 5 - taking over the intermediate parameter as the case may be, through a sensor for direct measurement of force;
Step 6 - electronic processing of the parameters in order to render the effective value of the measured flow rate.

5. Flow measurement method according to claim 4, **characterized in that** in order to execute the procedure from STEP 4 B, a reaction flowmeter without moving parts is placed on a secondary conduit, in parallel with a main conduit provided with a fluidic resistance, the secondary conduit having a significantly smaller diameter than that of the main conduit so that by previous establishing of the relationship between the fluid flows through the two conduits, by the effective measurement of a small secondary flow rate by the related reaction flowmeter, the configuration ensures the determination by calculation of the total measured flow rate.

6. Flow measurement method according to claim 4 **characterized in that** in order to execute the procedure from STEP 4 C, a configuration is achieved in the form of a connection and functional correlation, between two nonlinear reaction flowmeters, which have the two flow measurement ranges so correlated that the values of one are next to the other, with a very small overlap between them, and according to the stored algorithm, an electronic block of the flowmeter controls the switching, with a jet diverter, of the fluid flow through the main flowmeter, related to the branch with large diameter or through the secondary flowmeter related to the branch with small diameter, thus achieving an important extension of the total range of the flow measurement.

## Patentansprüche

1. Reaktionsdurchflussmessgerät ohne bewegliche Teile bestehnd aus einem primären Element (EP) , gebildet durch die Verbindung zwischen einem Referenzblock (BR), der in Form eines feststehenden horizontalen Zugangsrohrs realisiert wird, und einem Messblock (BS), ausgeführt als gekrümmtes, quasiunbeweglichen Rohr , das als unbewegliches Reaktionselement, das als "unbewegliches Reaktionselement" bezeichnet wird, **dadurch gekennzeichnet, dass** ein zur Durchflussmessung verwendetes Messelement (ES) die Messung der auf den Messblock (BS) ausgeübten Reaktionskraft F_{R} ermöglicht, mittels Sensoren zur direkten Messung seiner Schubkraft F₀, die sich außerhalb des Messmediums befinden und werden mittels Magnetkupplung betätigt, und die Zusammen mit den genannten Komponenten des Reaktionsdurchflussmessgerät bilden einen Durchflussmessgerät in Einzelkonfiguration, auf einer nichtlinearen Abhängigkeit "Reaktionskraft F_{R} - gemessenen Durchfluss" basierend, die direkte Messung der resultierenden Schubkraft F₀ nutzt, in zwei unterschiedliche funktionale Varianten jeweils die elektromagnetische Kompensation von F₀ oder die Verwendung einer Wägezelle mit Dehnungsmessstreifen , oder ein Durchflussmessgerät in Bypass-Konfiguration , bei der ein Reaktionsdurchflussmessmessgerät ohne bewegliche Teile in einer Nebenleitung parallel zu einer mit einem Strömungswiderstand versehenen Hauptleitung angeordnet ist, oder gegebenenfalls erweiterte Konfiguration, als funktionale Verbindung mit einer korrelierten Operation zwischen zwei Reaktionsdurchflussmessern eingerichtet, jedes mit seinem eigenen primären Element,und die wechselseitig auf ein gemeinsames Sekundärelement zugreifen der enthält den Kraftsensor, der die resultierende Schubkraft F₀ mittels elektromagnetischer Kompensation direkt misst, wobei die beiden Messbereiche sind dabei so aufeinander abgestimmt, dass sie nahtlos ineinander übergehen, wobei sich die Bereiche nur minimal überschneiden.

2. Reaktionsdurchflussmessgerät ohne bewegliche Teile nach Anspruch 1, wobei für den Durchflussmessmessgerät in der individuellen Konfiguration das Messfluid über einen Einlassanschluss (102) in den Durchflussmessmessgerät eintritt, der mit einer Düse (103) abschließt, welche in eine Düse (104) eines Reaktionsrohrs (105) mündet, das Fluid durchströmt das Reaktionsrohr (105) und beziehungsweise eine konvergente Auslassdüse (106), bevor es von einer Düse (107) eines Auslassanschlusses (108) aufgenommen wird, und . das Reaktionsrohr ist mit einer Welle (110) versehen, die senkrecht zu dieser verläuft und mit ihr fest verbunden ist, und das Reaktionsrohr (105) weist einen äußeren Ansatz (121) auf, in dem im Abstand Lₒ von der Wellenachse, ein Stift (122) fest eingefasst und fest befestigt ist , an dem ein inneren Magnet (123) in einem kleinen geschlossenen Rohr (124), so dass die aus dem Stift (122) und dem inneren Magneten (123) gebildete Baugruppe kann sich relativ zu dem geschlossenen Rohr (124) frei bewegen.an ein Gehäuse (109) geschweißt, und außerhalb des Rohrs (124) ist um dieses herum ein ringförmiger äußeren Magnet (125) angeordnet, der sich frei relativ zum Rohr (124) bewegen kann so dass, Aufgrund der magnetischen Kopplung zwischen den inneren Magnet (123) und äußerer Magnet (125), jede Änderung der Kraft F₀, die der Bewegungsrichtung des Stifts (121) bzw. des inneren Magneten (123) folgt, die Bewegungsrichtung des äußeren Magneten (125), fest an einer Halterung (126) befestigt, die konstruktiv mit dem beweglichen Teil eines Kraftsensors (127) verbunden ist und auf die er permanent die vom äußeren Magneten (125) bzw. vom inneren Magneten (123) aufgenommene Schubkraft Fₒ überträgt, und somit, dass der Kraftsensor (127) - ausgeführt als Kraftsensor oder Wägezelle mit einem Sensor auf Dehnungsmessstreifen-Basis gewährleistet der die Schubkraft Fₒ empfängt, , gewährleistet dessen Messung - entweder durch seinen elektromagnetischen Ausgleich oder mittels einer Wägezelle mit Dehnungsmessstreifen . und darüber hinaus , das elektrische Ausgangssignal des Sensors (127), proportional zum Wert der gemessenen Kraft Fₒ, wird an einen elektronischen Rechenblock (128) angelegt, der den entsprechenden Wert der Reaktionskraft F_{R} gemäß der bekannten analytischen Beziehung zwischen den Kräften F_{R} und Fₒ berechnet, der Block 128, der die zuvor gespeicherte Kalibrierkurve Qₘ= Qₘ (F_{R}) besitzt, ermöglicht dementsprechend die Berechnung des Momentanwert des Massenstroms Qₘ, kompensiert um Temperatur T und Druck P, die mittels der Sensoren (133) und (134) gemessen werden, die dem Messwert von Fₒ bzw. F_{R} entsprechen, und anschließend erzeugt er ein elektrisches Ausgangssignal, proportional zum jeweiligen Messwert von Qₘ.

3. Reaktionsdurchflussmessgerät ohne bewegliche Teile nach Anspruch 1, wobei für den Durchflussmessgerät in der Ausführung mit der erweiterten Konfiguration, bei der die Ausgangskraft durch elektromagnetischen Ausgleich gemessen wird, der gemessene Durchfluss Q über einen Eingangsanschluss (157) eintritt, der aus dem Eingangsanschluss (158) eines Strahlumlenkers (159) besteht, der am Einlass des Durchflussmessers angeordnet ist, wobei der Strahlumlenker (159) wird durch einen Magneten (160) betätigt und schaltet den Durchfluss des einströmenden Fluids entweder an einem Auslass (161) zum "Hauptdurchflussmesser" entsprechend der Position I des Umlenkers oder an einem Auslass (162) zum "Sekundärdurchflussmesser" entsprechend der Position II des Umlenkers und umgekehrt, gemäß dem von einem elektronischen Block (163) empfangenen Befehl, so dass wenn der Umlenker (159) anfänglich in Position I angesteuert wird, fließt das Fluid folglich nur durch den "Hauptdurchflussmesser", der aus einem unbeweglichen Einlassrohr (164) und einem Reaktionsrohr (165) besteht, das die Kraft erzeugt. Reaktionskraft und ein Abgasrohr (166), wobei das Hauptrohr (165) mit einer dazu senkrechten und starren Welle (167) versehen ist, die die Drehung des Rohrs (165) relativ zur vertikalen Achse der Welle ermöglicht, und die vom Reaktionsrohr (165) erzeugte Reaktionskraft F_{RM} wirkt im Abstand L_{M} von der Achse der Welle und das Hauptreaktionsrohr (165) ist mit einem Ansatz (168) versehen, in dem im Abstand Lₒ von der Wellenachse ein Stift (169) fest eingelassen ist, an dessen Ende ein Magnet (170) in einem kleinen, geschlossenen Rohr (171) fixiert ist, die Anordnung aus Stift (169) und Magnet (170) ist relativ zum geschlossenen Rohr (171) frei beweglich, und Außerhalb des Rohrs (171) befindet sich ein ringförmiger Magnet (173), der relativ dazu frei beweglich und fest an seiner Halterung (174) befestigt ist, der seinerseits konstruktiv mit dem beweglichen Teil eines Kraftsensors (175) verbunden ist., an dem beweglichen Teil eines Kraftsensors (175) ist permanent die vom Magneten (170) empfangene und zur Reaktionskraft F_{RM} proportionale Schubkraft Fₒ übertragen. Der Kraftsensor (175) empfängt zudem die Schubkraft F₀ mit dem Wert F0^{I}, die der Position I des Strahlablenkers (159) entspricht und somit den elektromagnetischen Ausgleich und dessen Messung gewährleistet. Folglich ist das elektrische Ausgangssignal des Kraftsensors (175) proportional zum Wert der Schubkraft F₀^{I} und wird an einen Elektronikbaustein (163) angelegt. Dieser berechnet den Wert der Reaktionskraft F_{RM} anhand der bekannten Beziehung zwischen den Kräften F₀^{I} und F_{RM} und anschließend den entsprechenden Wert des gemessenen Hauptvolumenstroms Q_{M} mithilfe der zuvor im Speicher abgelegten Kalibrierkurve Q_{M} = Q_{M} (F_{RM}).

4. Verfahren zur Durchflussmessung auf Basis eines Reaktionsdurchflussmessgeräts ohne bewegliche Teile nach Anspruch 1, **dadurch gekenzeichnet,** dass es die folgenden Schritte umfasst:
Schritt 1 - Festlegung aus technischen Gründen, die mit der Art des zu messenden Fluids, dem Wert der Durchflussrate und der Verfügbarkeit zusammenhängen, der Art der spezifischen Konfiguration, die vom Durchflussmessgerät verwendet wird;
Schritt 2. - Einleitung des Fluids mit der Messdurchflussrate Qₘ = A xv xp in den Durchflussmessgerät durch einen Referenzblock BR, der als Verlängerung des Einlassanschlusses in Form eines unbeweglichen horizontalen Rohrs mit einer konvergenten Düse ausgebildet ist und konstruktiv die Funktionskonstanz des Durchflussquerschnitts A = X_{R}, der den charakteristischen Parameter X_{R} des Durchflussmessgeräts darstellt, gegenüber der Durchflussänderung gewährleistet und die Hervorhebung des variablen Parameters Xᵥ = v des Durchflussmessgeräts bzw. der mit der Durchflussrate variablen Fluidgeschwindigkeit v bestimmt;
Schritt 3 - Die Fluidgeschwindigkeit v wird als Eingangsparameter des Messblocks BS des Durchflussmessgeräts verwendet, und Erhalt einer Reaktionskraft F_{R} an seinem Ausgang, die auf seine spezifische Form , ein quasi unbewegliches, um 90° gebogenes horizontales Rohr (2) zurückzuführen ist und als Reaktionselement bezeichnet , die aus dem Durchflussmessgerät austretende Flüssigkeit durch berührungslose Aufnahme an dessen Auslassanschluss, der kollinear zum Einlassanschluss verläuft .
Schritt 4 - Übernahme und Messung des charakteristischen Parameters X_{c} des Durchflussmessgeräts, auf dessen Grundlage die Durchflussrate direkt oder durch Multiplikation mit einem Proportionalitätsverhältnis berechnet wird, wobei Lösungen verwendet werden, die für die jeweilige Durchflussmesserkonfiguration spezifisch sind:
A. in individueller Konfiguration mit nichtlinearer Abhängigkeit des Ausgabeparameters - gemessener Durchflussrate- Reaktionskraft;
B. in Bypass-Konfiguration
- das Verhältnis zwischen dem sekundären Massenstrom, der an einer sekundären Leitung mit dem Reaktionsdurchflussmess gerät ohne bewegliche Teile gemessen wird, und dem Hauptmassenstrom, der durch eine Hauptleitung fließt, die durch einen Strömungswiderstand begrenzt ist;
C. in erweiterter Konfiguration, durch Messung der Ausgangsdruckkraft mittels elektromagnetischer Kompensation- der Wert der Umschaltflussrate der Durchflussmessung von einem Durchflussmesser zum anderen, mittels eines Strahlumlenkers zwischen den Messbereichen der beiden Komponentendurchflussmesser, die so korreliert sind, dass der eine praktisch eine Fortsetzung des anderen ist, wobei ein Zwischenparameter der Durchflussberechnung speziell für den in Betrieb befindlichen Durchflussmesser involviert ist;
Schritt 5 - Übernahme des gegebenenfalls auftretenden Zwischenparameters mittels eines Sensorszur direkten Kraftmessung,
Schritt 6 - elektronische Verarbeitung der Parameter zur Ermittlung des effektiven Wertes der gemessenen Durchflussrate.

5. Verfahren zur Durchflussmessung nach Anspruch 4, **dadurch gekennzeichnet, dass** zur Durchführung des Verfahrens ab Schritt 4 B ein Reaktionsdurchflussmessgerat ohne bewegliche Teile auf einer Sekundärleitung parallel zu einer mit einem Strömungswiderstand versehenen Hauptleitung angeordnet ist, wobei die Sekundärleitung einen deutlich kleineren Durchmesser als die Hauptleitung aufweist, sodass durch vorheriges Einstellen des Verhältnisses zwischen den Fluidströmen durch die beiden Leitungen und durch die effektive Messung eines kleinen Sekundärdurchflusses mittels des zuführenden Reaktionsdurchflussmessgeräts die Bestimmung des gesamten gemessenen Durchflusses durch Berechnung gewährleistet wird.

6. DurchflussmessvVerfahren zur Durchflussmessung , nach Anspruch 8, **dadurch gekennzeichnet, dass** zur Durchführung des Verfahrens ab Schritt 4C eine Konfiguration in Form einer Verbindung und einer funktionalen Korrelation zwischen zwei nichtlinearen Reaktionsdurchflussmessgeräten erreicht wird, deren zwei Durchflussmessbereiche so korreliert sind, dass die Werte des einen nahe beieinander liegen und sich nur sehr geringfügig überlappen, und gemäß dem gespeicherten Algorithmus steuert ein elektronischer Block des Durchflussmessgeräts mittels eines Strahlumlenkers die Umschaltung des Fluidstroms durch den Hauptdurchflussmessgerät, der dem Abzweig mit dem größeren Durchmessgeräten zuführt, oder durch den Sekundärdurchflussmesser, der dem Abzweig mit dem kleineren Durchmessgerät zuführt, wodurch eine signifikante Erweiterung des gesamten Durchflussmessbereichs erreicht wird.

## Revendications

1. Débitmètre à réaction sans pièces mobiles, composé, d'un élément primaire (EP) constitué de l'association d'un bloc de référence (BR), réalisé sous la forme d'un tube d'accès horizontal fixe, et d'un bloc sensible (BS), constitué d'un tube courbe quasi immobile appelé élément de réaction immobile, **caractérisé en ce qu'un** élément sensible (ES), utilisé pour la mesure de débit, permet de mesurer la force de réaction F_{R} exercée sur le bloc sensible (BS) au moyen de capteurs pour la mesure directe de sa force de poussée F₀, qui sont placés à l'extérieur du fluide mesuré et actionnés par couplage magnétique, et qui, associés aux éléments constitutifs du débitmètre à réaction, forment un débitmètre en configuration individuelle fonctionnant selon une relation non linéaire "la force de réaction F_{R} - débit mesuré", et reposant sur la mesure directe de la force de poussée de sortie F₀ , selon deux solutions fonctionnelles distinctes, respectivement par équilibrage électromagnétique du F₀ ou via un capteur de force à jauges de contrainte, or un débitmètre en configuration " by-pass " , obtenu en plaçant un débitmètre à réaction sans pièces mobiles sur une conduite secondaire, en parallèle d'une conduite principale équipée d'une résistance fluidique , ou respectivement, 'un débitmètre en configuration étendue, établi sous forme d'une liaison fonctionnelle impliquant un fonctionnement interdépendant, entre deux débitmètres à réaction , chaque débitmètre possèdent son propre élément primaire, mais utilisent, de manière séquentielle, un élément secondaire commun unique qui contient le capteur de force qui mesure directement la force de poussée de sortie F₀ par équilibrage électromagnétique et ayant les deux plages de mesure de débit tellement corrélées que les valeurs de l'une prolongent celles de l'autre, avec un très faible recouvrement entre elles.

2. Débitmètre à réaction sans pièces mobiles selon la revendication 1, dans lequel pour le débitmètre dans la configuration individuelle , le fluide à mesurer pénètre dans le débitmètre par un orifice d'entrée (102) terminé par une buse (103) qui débouche dans une buse (104) d'un tube de réaction (105), le fluide s'écoulent ensuite dans le tube de réaction (105) et respectivement dans une buse de sortie convergente (106), avant d'être recueilli par une buse (107) d'un orifice de sortie (108), et le tube de réaction est muni d'un arbre (110) perpendiculaire à celui-ci et solidaire de celui-ci, et le tube de réaction (105) est muni d'un bossage extérieur (121) dans lequel, à une distance Lₒ de l'axe de l'arbre, une goupille (122) est incorporé de manière rigide et fixé rigidement à un aimant interne (123) placé à l'intérieur d'un petit tube fermé (124), de sorte que le sous-ensemble formé par la goupille (122) et l'aimant intérieur (123) puisse se déplacer librement par rapport àu tube fermé (124) est soudé à un boîtier (109) and à l'extérieur du tube (124), un aimant annulaire extérieur (125) est placé autour de celui-ci et peut se déplacer librement par rapport au tube fermé (124), de sorte que, grâce au couplage magnétique entre l'aimant intérieur (123) et l'aimant extérieur (125), toute variation de la force F₀, induite par le déplacement de la broche (121) respectivement de l'aimant intérieur (123), détermine le déplacement de l'aimant extérieur (125), fixé rigidement à un support (126) lui-même fixé à la partie mobile d'un capteur de force (127),. et vers lequel il transmet en permanence la force de poussée reçue par l'aimant extérieur (125) et respectivement par l'aimant intérieur (123), ayant la valeur instantanée F₀ , et donc que le capteur (127), réalisé sous la forme d'un capteur de force ou d'une cellule de pesée dotée d'un capteur de type jauge de contrainte , qui reçoit la force de poussée Fₒ, assure sa mesure soit par équilibrage électromagnétique ou avec un capteur de force muni d'une jauge de contrainte respectivement, et en outre le signal de sortie électrique du capteur (127), proportionnel à la valeur de la force mesurée Fₒ, est appliqué à un bloc de calcul électronique (128) qui calcule la valeur correspondante de la force de réaction F_{R}, selon la relation analytique connue entre les forces F_{R} et Fₒ, et sur cette base, le bloc 128, ayant la courbe d'étalonnage Qₘ = Qₘ (F_{R}) préalablement stockée, fournit le calcul de la valeur instantanée du débit massique Qₘ compensée par la temperature T et la pression P, ces paramètres étant mesurés par les capteurs (133) et (134) correspondant à la valeur mesurée de Fₒ, respectivement F_{R} et génère un signal de sortie électrique, proportionnel à la valeur mesurée respective de Qₘ.

3. Débitmètre à réaction sans pièces mobiles selon la revendication 1, dans lequel, pour le débitmètre à configuration étendue, avec mesure de la force de poussée de sortie par équilibrage électromagnétique, le débit mesuré Q entre par une connexion d'entrée (157), constituée de la connexion d'entrée (158) d'un déflecteur de jet (159), placé à l'entrée du débitmètre, le déflecteur de jet (159), étant actionné par un solénoïde (160), commute le débit du fluide entrant, soit par une sortie (161), vers le "débitmètre principal" correspondant à la position I du déflecteur, soit par une sortie (162), vers le " débitmètre secondaire "correspondant à la position II du déflecteur, et inversement, selon la commande reçue d'un bloc électronique (163), ainsi que , si le déflecteur (159) est initialement commandé en position I, le fluide circule uniquement à travers le " débitmètre principal" , constitué d'un tube d'entrée fixe (164), d'un tube de réaction (165) générant la force de réaction et d'un un tube d'échappement (166), le tube principal (165) étant muni d'un arbre (167) perpendiculaire à celui-ci et rigide par rapport à lui, permettant ainsi la rotation du tube (165) autour de l'axe vertical de l'arbre, et la force de réaction F_{RM}, générée par le tube de réaction (165), s'exerce à une distance L_{M} de l'axe de l'arbre, et le tube de réaction principal (165) est muni d'un bossage (168) dans lequel, à une distance Lₒ de l'axe de l'arbre, une goupille (169) est encastrée rigidement. À l'extrémité de cette goupille est fixé rigidement un aimant (170) positionné à l'intérieur d'un petit tube fermé (171), l'ensemble constitué de la goupille (169) et de l'aimant (170) peut se déplacer librement par rapport au tube fermé (171), et a l'extérieur du tube (171) est placé un aimant annulaire (173), libre de se déplacer par rapport à l'aimant, fixé rigidement à son support (174) lui-même fixé constructivement au tube mobile. une partie d'un capteur de force (175), lui transmet en permanence la force de poussée de sortie F_{o,} reçue par couplage magnétique de l'aimant (170) et proportionnelle à la force de réaction F_{RM} et le capteur de force (175) reçoit la force de poussée de sortie F₀ avec la valeur F₀^{I}, correspondant à la position I du déflecteur de jet (159) assurant l'équilibrage électromagnétique et sa mesure, par conséquent, le signal de sortie électrique du capteur de force (175) est proportionnel à la valeur de la force de poussée F₀^{I} et est appliqué à un bloc électronique (163) qui calcule la valeur de la force de réaction F_{RM}, selon la relation connue entre les forces F₀^{I} et F_{RM}, puis la valeur correspondante du débit principal mesuré Q_{M}, en utilisant la courbe d'étalonnage Q_{M} = Q_{M} (F_{RM}), préalablement stockée dans sa mémoire.

4. Procédé de mesure de débit basé sur un débitmètre à réaction sans pièces mobiles, selon la revendication 1, **caractérisé en ce qu'**il implique la réalisation des étapes suivantes :
Étape 1 - établir, pour des raisons techniques liées à la nature du fluide mesuré, à la valeur du débit et à la disponibilité, le type de configuration spécifique utilisé par le débitmètre;
Étape 2. - introduction du fluide avec le débit de mesure Qₘ = A xv xp dans le débitmètre à travers un bloc de référence BR réalisé comme une extension de la connexion d'entrée en forme de tube horizontal immobile terminé par une buse convergente qui assure de manière constructive la constance fonctionnelle, par rapport à la variation du débit, de la valeur de la section d'écoulement A = X_{R} constituant le paramètre caractéristique X_{R} du débitmètre, déterminant la mise en évidence du paramètre variable Xv = v du débitmètre, respectivement la vitesse du fluide v, variable avec le débit ;
Étape 3 - La vitesse du fluide v est utilisée comme paramètre d'entrée du bloc sensible BS du débitmètre et obtenant à sa sortie, une force de réaction F_{R} générée grâce à la forme spécifique d'un tube horizontal quasi immobile coudé à 90°, appelé élément de réaction, l'évacuation du fluide du débitmètre étant permis par son raccord de sortie, colinéaire à record de l'entrée, sans contact avec le fluide.
Étape 4 - prise en charge et mesure du paramètre caractéristique X_{c} du débitmètre, sur la base duquel le débit est calculé, directement ou par multiplication avec un rapport de proportionnalité, à l'aide de solutions spécifiques au type de configuration du débitmètre :
A. en configuration individuelle avec dépendance non linéaire du paramètre de sortie débit mesuré- la force de réaction,;
B.en configuration de by-pass;
- le rapport entre le débit massique secondaire mesuré sur un conduit secondaire par le débitmètre à réaction sans pièces mobiles et le débit massique principal circulant dans un conduit principal limité par une résistance fluidique ;
C. en configuration étendue avec la mesure de la force de poussée en sortie par équilibrage électromagnétique- la valeur du débit de commutation de la mesure de débit d'un débitmètre à l'autre, au moyen d'un déviateur de jet, entre les plages de mesure des deux débitmètres composants, si corrélés que l'un est pratiquement une continuation de l'autre, en fonction duquel intervient un paramètre intermédiaire de calcul du débit spécifique au débitmètre en fonctionnement ;
Étape 5 - prise en charge du paramètre intermédiaire, le cas échéant, par l'intermédiaire d'un capteur pour la mesure directe de la force,
Étape 6 - Traitement électronique des paramètres afin de rendre la valeur effective du débit mesuré.

5. Procédé de mesure de débit , selon la revendication 4, **caractérisé en ce que**, pour exécuter la procédure à partir de l'étape 4 B, un débitmètre à réaction sans pièces mobiles est placé sur une conduite secondaire, en parallèle avec une conduite principale munie d'une résistance fluidique, la conduite secondaire ayant un diamètre nettement inférieur à celui de la conduite principale de sorte que, grâce à l'établissement préalable de la relation entre les débits du fluide dans les deux conduites, par la mesure efficace d'un faible débit secondaire par le débitmètre à réaction afférent, la configuration assure la détermination par calcul du débit total mesuré.

6. Procédé de mesure de débit , selon la revendication 4, **caractérisé en ce que**, pour exécuter la procédure à partir de l'étape 4 C, une configuration est réalisée sous la forme d'une connexion et d'une corrélation fonctionnelle entre deux débitmètres à réaction non linéaires, qui ont les deux plages de mesure de débit si étroitement corrélées que leurs valeurs sont adjacentes, avec un très faible chevauchement, et, conformément à l'algorithme enregistré, un bloc électronique du débitmètre commande la commutation, au moyen d'un déflecteur de jet, du flux de fluide à travers le débitmètre principal, alimenté par la branche de grand diamètre, ou à travers le débitmètre secondaire, alimenté par la branche de petit diamètre, permettant ainsi une extension importante de la plage totale de mesure de débit.
